# EUROPEAN PATENT APPLICATION

(11) **EP 4 697 668 A1**
(43) Date of publication of application: **18.02.2026**
(21) Application number: 24803744.2
(22) Date of filing: 09.05.2024
(51) Int. Cl.: H04L 41/5003, H04L 41/0894, H04L 65/80, H04L 65/75, H04L 65/65, H04L 47/80

(54) **METHOD AND APPARATUS FOR MANAGING SESSION IN WIRELESS COMMUNICATION SYSTEM**

(30) Priority: 09.05.2023 KR 20230059655
(71) Applicant: Samsung Electronics Co., Ltd., Suwon-si, Gyeonggi-do 16677 (KR)
(72) Inventor: BAE, Jaehyeon, Suwon-si Gyeonggi-do 16677 (KR); BAEK, Youngkyo, Suwon-si Gyeonggi-do 16677 (KR); YANG, Hyunkoo, Suwon-si Gyeonggi-do 16677 (KR)
(74) Representative: HGF
(86) International application number: PCT/KR2024/006269
(87) International publication number: WO 2024/232691

(57) **Abstract**

The present disclosure relates to a 5G or 6G communication system for supporting higher data transmission rates. A method performed by a policy control function (PCF) entity in a wireless communication system, according to the present disclosure, may comprise the steps of: receiving, from an application function (AF) entity by using a network exposure function (NEF) entity, a first message including a packet data unit (PDU) set handling indicator and PDU set handling information for a multiplexing service; determining, on the basis of the first message, whether multiplexing service-based PDU set handling information is supported; and transmitting, to the AF entity by using the NEF entity, a second message indicating whether multiplexing service-based PDU set handling information is supported.

## Description

### [Technical Field]

The disclosure relates to a wireless communication system. Specifically, the disclosure relates to a method and an apparatus for, when packets of different media types are transmitted through a single service flow, generating information for processing protocol data units (PDUs) having the same characteristics in units of sets by considering service characteristics in a wireless communication system, and to a method and an apparatus for supporting RAN scheduling, based on a PDU set.

### [Background Art]

5G mobile communication technologies define broad frequency bands such that high transmission rates and new services are possible, and can be implemented not only in "Sub 6GHz" bands such as 3.5GHz, but also in "Above 6GHz" bands referred to as mmWave including 28GHz and 39GHz. In addition, it has been considered to implement 6G mobile communication technologies (referred to as Beyond 5G systems) in terahertz (THz) bands (for example, 95GHz to 3THz bands) in order to accomplish transmission rates fifty times faster than 5G mobile communication technologies and ultra-low latencies one-tenth of 5G mobile communication technologies.

At the beginning of the development of 5G mobile communication technologies, in order to support services and to satisfy performance requirements in connection with enhanced Mobile BroadBand (eMBB), Ultra Reliable Low Latency Communications (URLLC), and massive Machine-Type Communications (mMTC), there has been ongoing standardization regarding beamforming and massive MIMO for mitigating radio-wave path loss and increasing radio-wave transmission distances in mmWave, supporting numerologies (for example, operating multiple subcarrier spacings) for efficiently utilizing mmWave resources and dynamic operation of slot formats, initial access technologies for supporting multi-beam transmission and broadbands, definition and operation of BWP (BandWidth Part), new channel coding methods such as a LDPC (Low Density Parity Check) code for large amount of data transmission and a polar code for highly reliable transmission of control information, L2 pre-processing, and network slicing for providing a dedicated network specialized to a specific service.

Currently, there are ongoing discussions regarding improvement and performance enhancement of initial 5G mobile communication technologies in view of services to be supported by 5G mobile communication technologies, and there has been physical layer standardization regarding technologies such as V2X (Vehicle-to-everything) for aiding driving determination by autonomous vehicles based on information regarding positions and states of vehicles transmitted by the vehicles and for enhancing user convenience, NR-U (New Radio Unlicensed) aimed at system operations conforming to various regulation-related requirements in unlicensed bands, NR UE Power Saving, Non-Terrestrial Network (NTN) which is UE-satellite direct communication for providing coverage in an area in which communication with terrestrial networks is unavailable, and positioning.

Moreover, there has been ongoing standardization in air interface architecture/protocol regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACH for NR). There also has been ongoing standardization in system architecture/service regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

As 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with extended Reality (XR) for efficiently supporting AR (Augmented Reality), VR (Virtual Reality), MR (Mixed Reality) and the like, 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for providing coverage in terahertz bands of 6G mobile communication technologies, multi-antenna transmission technologies such as Full Dimensional MIMO (FD-MIMO), array antennas and large-scale antennas, metamaterial-based lenses and antennas for improving coverage of terahertz band signals, high-dimensional space multiplexing technology using OAM (Orbital Angular Momentum), and RIS (Reconfigurable Intelligent Surface), but also full-duplex technology for increasing frequency efficiency of 6G mobile communication technologies and improving system networks, AI-based communication technology for implementing system optimization by utilizing satellites and AI (Artificial Intelligence) from the design stage and internalizing end-to-end AI support functions, and next-generation distributed computing technology for implementing services at levels of complexity exceeding the limit of UE operation capability by utilizing ultra-high-performance communication and computing resources.

### [Disclosure of Invention]

### [Technical Problem]

In the case of metaverse and extended reality (XR) applications, since a large amount of traffic must be transmitted by a UE through downlink/uplink, it is important to effectively process the traffic, which is a critical technical issue to be solved, unlike existing applications. Unlike the existing research, which has mainly focused on effectively transferring downlink traffic to a UE, for metaverse/XR traffic, effectively processing downlink traffic by considering the service characteristics of each packet is a new challenge that must be solved. Therefore, the disclosure provides a method for efficiently processing the network congestion when a congestion situation occurs during processing in a network entity (e.g., RAN) by considering importance of the packets being serviced, by processing packets in units (e.g., PDU set) having the same characteristics, by using traffic characteristic information provided in the current service through an application function (AF) entity or an application server (AS), etc., in the XR service, rather than a method in which a scheduler randomly drops packets. In addition, rather than the method in which the UPF uses a simple 5-tuple to appropriately forward existing data during packet processing as shown above, a method is provided in which real-time transport protocol (RTP) and network adaptation layer (NAL) unit header information of actual data are recognized and extracted to process by using service characteristics, the recognized and extracted information is classified in units of grouping (PDU set) of the same packets based on the corresponding information, and PDU set information is generated based on the extracted information or information received from the AS and provided the same through the GPRS Tunneling Protocol (GTP)-U header to schedule the PDU set information based on the corresponding information.

An aspect of the disclosure may provide an apparatus and a method for generating information for processing packets having the same characteristics by considering service traffic characteristics in a communication system.

An aspect of the disclosure may provide an apparatus and a method in which, when packets having different media characteristics are transmitted through a single service flow, a service request including PDU set information for handling packets having the same characteristics and indicator information (RTP bundling indication) for indicating that packets having different media characteristics inside a single service flow are transmitted are delivered from an AF to a PCF and information for processing policy information including QoS update of the RTP bundled service flow are generated according to whether the service is accepted, based on the RTP bundled service request, by considering the service traffic characteristics in a communication system.

An aspect of the disclosure may provide an apparatus and a method for generating information for updating policy information and reporting the corresponding PCF event, based on QoS monitoring reporting information, during the use of a service using an RTP-bundled single service flow.

### [Solution to Problem]

According to an embodiment of the disclosure, a method performed by a policy control function (PCF) entity in a wireless communication system may include: receiving, from an application function (AF) entity through a network exposure function (NEF) entity, a first message including policy update requirements associated with an AF session; based on packet data unit (PDU) set information and information regarding RTP bundling service requests in the first message, determining whether to accept the policy update requirements; when it is determined to accept the policy update requirements, transmitting, to the AF through the NEF entity, a second message including an indicator indicating that the policy update requirements are accepted; and transmitting, to a session management function (SMF) entity, a third message including an indicator indicating policy updates.

### [Advantageous Effects of Invention]

According to the embodiments proposed in the disclosure, the AF may provide a protocol descriptor including characteristic information of one or more media constituting a service flow to the RAN to request PDU set-based scheduling in consideration of the corresponding service characteristics in a wireless communication system when a service is provided by one or more media. The PCF may determine the policy update of the protocol descriptor including media characteristic information and may provide the SMF with a PCC rule including information for generating PDU set information or recognizing PDU set information transmitted in packet headers when processing packets within the service flow in the UPF. When an RTP bundling service request is transmitted to the PCF based on the requirement that one or more media types, such as WebRTC, be transmitted within a single service flow in the AF, the PCF may determine whether to accept the request based on the information, and if the requirement of the AF is not accepted, the PCF may perform policy information update by using individual service flows for each media type and transfer the result value of the request to the AF. If all the packets within a single service flow are transmitted from the AS to the UPF through a PDU set information extension header, the PDU set information is included in the GTP-U extension header and transmitted to the RAN or if media packets within one or more service flows do not receive PDU set information from the AS, packet detection and generation may be performed in the UPF to generate the PDU set information and related information for this may be transmitted from the PCF to the SMF through the PCC rule. To this end, the PDU set information in the AF's service requirement message or in the protocol descriptor may include indicator information indicating whether all the packets in the corresponding service flow are supported. Within the service requirement message through the RTP bundling service, QoS monitoring reporting information for the corresponding QoS flow may be requested to the PCF through QoS monitoring, such as data rate monitoring, and the PCF may determine whether to continue the service through RTP bundling according to the corresponding reporting result. This aims to provide an apparatus and a method, during high-frame and high-capacity application traffic services such as XR services, for providing an appropriate XR service application service based on network conditions and a scheduling service based on packet service characteristics (PDU set information) even in services where packets of different media types, such as RTP bundling, are multiplexed in a single service flow, considering the service characteristics of the packet (such as the importance between packets) when congestion occurs in the actual network.

### [Brief Description of Drawings]

FIG. 1 illustrates a network structure and interfaces of a wireless communication system according to an embodiment of the disclosure.
FIG. 2 illustrates an operation for performing RAN scheduling based on PDU set handling of different media type packets within a single service flow in a wireless communication system according to an embodiment of the disclosure.
FIG. 3 illustrates an operation when a PCF entity has rejected a service request transferred from an AF entity in a wireless communication system according to an embodiment of the disclosure.
FIG. 4 is a diagram illustrating a policy update operation based on QoS monitoring report information through QoS monitoring during service utilization through RTP bundling in a wireless communication system according to an embodiment of the disclosure.
FIG. 5 illustrates an operation for performing PDU set-based RAN scheduling on a packet transmitted through one or more service flows having the same media type.
FIG. 6 is a flowchart illustrating a method for supporting scheduling of an RTP-bundled service by using a protocol description including RTP bundling-related information transferred through an AF entity in a wireless communication system according to an embodiment of the disclosure.
FIG. 7 is a flowchart illustrating a method for supporting PDU set-based RAN scheduling when an RTP bundling-based service request transferred from an AF entity to a PCF entity is rejected, in a wireless communication system according to an embodiment of the disclosure.
FIG. 8 is a flowchart illustrating a method for supporting policy update, during use of RTP-bundled basic services, based on a QoS monitoring reporting value in a wireless communication system according to an embodiment of the disclosure.
FIG. 9 is a flowchart illustrating a method for supporting one or more individual service flow-based services having the same media type.
FIG. 10 illustrates a structure of a UE according to an embodiment of the disclosure.
FIG. 11 illustrates a structure of a base station according to an embodiment of the disclosure.
FIG. 12 illustrates a structure of a network function (or network entity) according to an embodiment of the disclosure.

### [Mode for the Invention]

Hereinafter, an embodiment of the disclosure will be described in detail with reference to the accompanying drawings.

In describing the disclosure, descriptions related to technical contents well-known in the art and not associated directly with the disclosure will be omitted. Such an omission of unnecessary descriptions is intended to prevent obscuring of the main idea of the disclosure and more clearly transfer the main idea. The terms which will be described below are terms defined in consideration of the functions in the disclosure, and may be different according to users, intentions of the users, or customs. Therefore, the definitions of the terms should be made based on the contents throughout the specification.

For the same reason, in the accompanying drawings, some elements may be exaggerated, omitted, or schematically illustrated. Also, the size of each element does not completely reflect the actual size thereof. In the respective drawings, the same or corresponding elements are assigned the same reference numerals.

In the following description, a base station is an entity that allocates resources to terminals, and may be at least one of a gNode B, an eNode B, a Node B (or xNode B (where, x is an alphabet including g or e)), a wireless access unit, a base station controller, a satellite, an airborne, and a node on a network. A user equipment (UE) may include a mobile station (MS), a vehicular, a satellite, an airborne, a cellular phone, a smartphone, a computer, or a multimedia system capable of performing communication functions. In the disclosure, a "downlink (DL)" refers to a radio link via which a base station transmits a signal to a terminal, and an "uplink (UL)" refers to a radio link via which a terminal transmits a signal to a base station. Additionally, a "sidelink (SL)" may exist, which refers to a radio link via which a UE transmits a signal to another UE.

Furthermore, in the following description, LTE, LTE-A, or 5G systems may be described by way of example, but the embodiments of the disclosure may also be applied to other communication systems having similar technical backgrounds or channel types. For example, 5G-Advance, NR-Advance, or 6th generation (6G) mobile communication technologies developed beyond 5G mobile communication technologies (or new radio (NR)) may be included therein, and in the following description, the "5G" may be the concept that covers the exiting LTE, LTE-A, or other similar services. In addition, based on determinations by those skilled in the art, the disclosure may also be applied to other communication systems through some modifications without significantly departing from the scope of the disclosure.

Herein, it will be understood that each block of the flowchart illustrations, and combinations of blocks in the flowchart illustrations, can be implemented by computer program instructions. These computer program instructions can be provided to a processor of a general-purpose computer, special purpose computer, or other programmable data processing apparatus to produce a machine, such that the instructions, which execute via the processor of the computer or other programmable data processing apparatus, create means for implementing the functions specified in the flowchart block or blocks. These computer program instructions may also be stored in a computer usable or computer-readable memory that can direct a computer or other programmable data processing apparatus to function in a particular manner, such that the instructions stored in the computer usable or computer-readable memory produce an article of manufacture including instruction means that implement the function specified in the flowchart block or blocks. The computer program instructions may also be loaded onto a computer or other programmable data processing apparatus to cause a series of operational steps to be performed on the computer or other programmable apparatus to produce a computer implemented process such that the instructions that execute on the computer or other programmable apparatus provide steps for implementing the functions specified in the flowchart block or blocks.

Furthermore, each block in the flowchart illustrations may represent a module, segment, or portion of code, which includes one or more executable instructions for implementing the specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the functionality involved.

As used in embodiments of the disclosure, the term "unit" refers to a software element or a hardware element, such as a field programmable gate array (FPGA) or an application specific integrated circuit (ASIC), and the "unit" may perform certain functions. However, the "unit" does not always have a meaning limited to software or hardware. The "unit" may be constructed either to be stored in an addressable storage medium or to execute one or more processors. Therefore, the "unit" includes, for example, software elements, object-oriented software elements, class elements or task elements, processes, functions, properties, procedures, sub-routines, segments of a program code, drivers, firmware, micro-codes, circuits, data, database, data structures, tables, arrays, and parameters. The elements and functions provided by the "unit" may be either combined into a smaller number of elements, or a "unit", or divided into a larger number of elements, or a "unit". Moreover, the elements and "units" may be implemented to reproduce one or more CPUs within a device or a security multimedia card. Furthermore, the "unit" in embodiments may include one or more processors.

The 3GPP, which is responsible for cellular mobile communication standardization, has introduced a new core network structure named 5G core (5GC) and is pursuing the standardization in order to push evolution from a 4G LTE system to a 5G system. 5GC supports the following distinguishable functions, compared to an evolved packet core (EPC) that is a network core for 4G.

In 5GC, a network slicing function is introduced. As requirements of 5G, 5GC is required to support various terminal types and services (e.g., enhanced mobile broadband (eMBB), ultra reliable low latency communications (URLLC), and massive machine type communications (mMTC)). Such terminals/services have different requirements for a core network. For example, the eMBB service may require a high data rate, and the URLLC service may require high stability and low latency. A network slicing technology has been proposed to satisfy these various service requirements.

Network slicing may mean a method of virtualizing one physical network to make many logical networks (e.g., network slices). Activated network slices may be called network slice instances, and each network slice instance (NSI) may have a different characteristic. A mobile communication service provider may configure a network function (NF) suitable for the characteristic of each NSI so as to satisfy various service requirements according to terminals/services. For example, the mobile communication service provider may assign an NSI suitable for the characteristic of a service required thereby, so that many 5G services (e.g., eMBB, URLLC, or mMTC) are efficiently supportable.

5GC may easily support a network virtualization paradigm by separating a mobility management function and a session management function. In 4G LTE, all terminals have been provided with services from a network through signaling exchange with single core equipment, which is called a mobility management entity (MME) serving as registration, authentication, and a mobility management and session management function. In 5G, as the number of terminals (including, for example, MTC terminals) has explosively increased and mobility and traffic/session characteristics to be supported have been subdivided according to terminal types, scalability for adding entities according to required functions is inevitably reduced if a single entity (for example, MME) supports all the functions. Therefore, in order to improve scalability in terms of signaling loads and the function/implementation complexity of a core entity responsible for a control plane, various functions are being developed based on a structure of separating a mobility management function and a session management function.

According to an embodiment of the disclosure, a method performed by a PCF entity supporting radio access network (RAN) scheduling based on a protocol data unit (PDU) set which is a unit of packets classified by traffic characteristics among download packets, in a wireless communication system, may include receiving, from an AF, a protocol description message including RTP payload type information such as codec type and sampling rate, and a PDU set information supported for all packets within a service flow indicating whether PDU set information is included in an RTP header extension, and transmitting, to a UPF entity, a session establishment request message including a packet detection rule (PDR) for generating PDU set information and for processing related parameters of the PDU set information.

According to the disclosure, a method performed by a PCF entity supporting radio access network (RAN) scheduling based on a protocol data unit (PDU) set which is a unit of packets classified by traffic characteristics among download packets, in a wireless communication system, may include receiving, from a network exposure function (NEF), a policy authorization request message including PDU set handling information and a PDU set information-related parameter, generating a PDU set information generation rule, based on the PDU set handling information and the PDU set information-related parameter, and transmitting, to a session management function (SMF) entity, a policy control update message including the PDU set information generation rule and the PDU set information-related parameter.

According to an embodiment of the disclosure, a method performed by a policy control function (PCF) entity in a wireless communication system may include determining by a UPF entity whether to generate PDU set information having the same characteristics in response to a request from an AF entity, based on PDU set processing information, transmitting, to a radio access network (RAN) entity through a GTP-U header, whether scheduling is supported based on PDU set information generated by the UPF and corresponding information, and receiving the PDU set information through the GTP-U header.

According to an embodiment of the disclosure, a PCF entity is provided in a communication system, and the PCF entity may include a transceiver and at least one processor, and the at least one processor may be configured to receive, through the transceiver, a PDU set processing assistance message including information related to whether generation of PDU set processing information for PDU set unit processing reflecting the requirements for PDU set unit processing is supported by an AF entity, transmit, to a session management function (SMF) entity through the transceiver, a protocol data unit (PDU) session management (SM) update request message including information related to whether the PDU set processing information is generated by a UPF, based on the PDU set processing assistance message, and receive, from the SMF entity through the transceiver, a PDU session SM update response message as a response to the PDU session SM update request message.

According to the disclosure, a PCF entity supporting radio access network (RAN) scheduling based on a protocol data unit (PDU) set which is a unit of packets classified by traffic characteristics among download packets of a wireless communication system may include a transceiver and a processor configured to control the transceiver to receive, from a network exposure function (NEF), a policy authorization request message including PDU set handling information and a PDU set information-related parameter when RTP-bundled multimedia type packets are transmitted through a single service flow, generate a PDU set information generation rule, based on the PDU set handling information and the PDU set information-related parameter, and transmit, to a session management function (SMF) entity, a policy control update message including the PDU set information generation rule and the PDU set information-related parameter.

According to an embodiment of the disclosure, an operation method performed by a policy control function (PCF) entity in a wireless communication system is provided, and the operation method may include receiving, from an application function (AF) entity, a protocol description message including whether the XR service supports the generation of PDU set information for PDU set-based services, PDU set handling indication, and PDU set information, transmitting, based on the protocol description message, to a session management function (SMF) entity, a protocol data unit (PDU) session management (SM) policy update request message including a PDU set information generation related-parameter related to whether PDU set information generation by a user plane function (UPF)is necessary, and receiving, from the SMF entity, a PDU session SM update response message in response to a response to the PDU session SM policy update request message. The SMF entity having received the message from the PCF entity may include transmitting, to the UPF entity, an N4 session generation or modification request message including PDU set information generation or detection rules included in the policy update request message, and receiving an N4 generation and modification request response message.

According to an embodiment of the disclosure, an operation method performed by a policy control function (PCF) entity in a wireless communication system is provided, and the operation method may include receiving, from an application function (AF) entity, a QoS monitoring request message including QoS monitoring requirement information of a RTP bundled QoS flow, transmitting, to a session management function (SMF) entity, a session management (SM) policy control update notification request message including QoS monitoring policy information, based on the QoS monitoring request message, and receiving, from the SMF entity, an SM policy control update notification response message in response to the SM policy control update notification request message.

According to an embodiment of the disclosure, an operation method performed by a session management function (SMF) in a wireless communication system is provided, and the method may include receiving a QoS monitoring reporting message from a RAN or UPF based on QoS monitoring requirements, transmitting, to a policy control function (PCF) entity, a session management (SM) policy control update request message including the QoS monitoring reporting message, based on the QoS monitoring reporting message, and receiving, from the PCF entity, an SM policy control update response message in response to the SM policy control update request message.

According to an embodiment of the disclosure, an operation method performed by a user plane function (UPF) entity in a wireless communication system is provided, and the operation method may include receiving, from an application function (AF) entity, a protocol description message including information related to whether PDU set information is supported by the AS, transmitting, based on the protocol description message, to a session management function (SMF) entity, a protocol data unit (PDU) session management (SM) update request message including information related to whether PDU set information is supported by the AS, and receiving, from the SMF entity, a PDU session SM update response message in response to a response to the PDU session SM policy update request message.

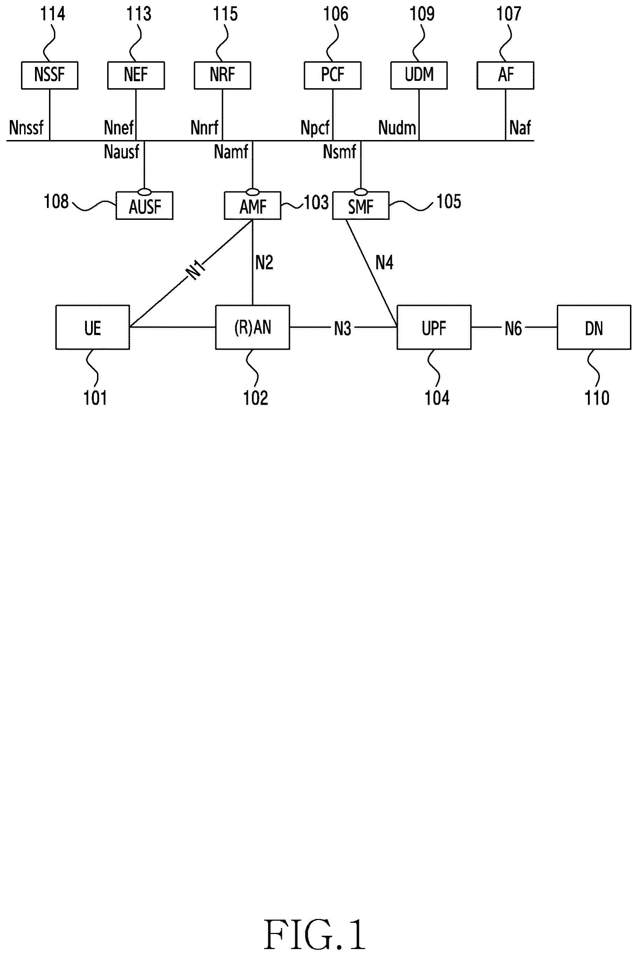

FIG. 1 illustrates a network structure and interfaces of a 5G system according to an embodiment of the disclosure.

Network entities included in the network structure of the 5G system in FIG. 1 may include network functions (NFs), depending on system implementations.

Referring to FIG. 1, the network structure of the 5G system 100 may include various network entities. For example, the 5G system 100 may include at least one of an authentication server function (AUSF) entity 108, a (core) access and mobility management function (AMF) entity 103, a session management function (SMF) entity 105, a policy control function (PCF) entity 106, an application function (AF) entity 107, a unified data management (UDM) entity 109, a data network (DN) 110, a network exposure function (NEF) entity 113, a network slicing selection function (NSSF) entity 114, a user plane function (UPF) entity 104, a (radio) access network (R)AN) 102, or a terminal, for example, a user equipment (UE) 101.

The respective NFs of the 5G system 100 may support the following functions.

The ASUF 108 may process and store data for authentication of the UE 101.

The AMF 103 may provide functions for access and mobility management on a per-UE basis, and basically, one UE may be connected to one AMF. Specifically, the AMF 103 may support functions such as signaling between CN nodes for mobility between 3GPP access networks, radio access network (RAN) CP interface (i.e., N2 interface) termination, non-access stratum (NAS) signaling termination (N1), NAS signaling security (NAS ciphering and integrity protection), AS security control, registration management (registration area management), connection management, idle mode UE reachability (including control and execution of paging retransmission), mobility management control (subscription and policy), intra-system mobility and inter-system mobility support, network slicing support, SMF selection, lawful intercept (LI) (for an AMF event and an interface to an LI system), delivery of session management (SM) messages between the UE and the SMF, a transparent proxy for session management (SM) message routing, access authentication, access authorization including roaming permission checking, delivery of SMS messages between the UE and a short message service function (SMSF), a security anchor function (SAF), and/or security context management (SCM). Some or all of the functions of the AMF entity 103 may be supported in a single instance of one AMF entity.

The DN 110 refers to, for example, an operator service, Internet access, a third-party service, or the like. The DN 110 may transmit a downlink protocol data unit (PDU) to the UPF 104, or receive, from the UPF 101, a PDU transmitted by the UE 104.

The PCF entity 106 may provide a function of receiving information on a packet flow from an application server to determine policies, such as mobility management and session management. Specifically, the PCF entity 106 may support functions, such as support of a unified policy framework for controlling a network operation, provision of a policy rule so that the control plane function(s) (e.g., AMF, SMF, etc.) may execute the policy rule, and front end implementation for accessing related subscription information in order to determine a policy within a user data repository (UDR).

The SMF entity 105 may provide a session management function, and when the UE 101 has multiple sessions, the sessions may be managed by different SMF entities. Specifically, the SMF entity 105 may support functions such as session management (e.g., establishment, modification, and release of a session, including maintenance of a tunnel between the UPF entity 104 and the (R)AN 102 node), assignment and management of UE IP addresses (optionally including authentication), selection and control of a UP function, configuration of traffic steering to route traffic from the UPF entity 104 to appropriate destinations, and termination of interfaces toward policy control functions, enforcement of control parts of policy and quality of service (QoS), lawful intercept (LI) (for an SM event and an interface to an LI system), termination of SM parts of NAS messages, downlink data notification, delivery of access network (AN)-specific SM information to (R)AN 102 through N2 via an initiator (AMF entity 103), determination of a session and service continuity (SSC) mode, and a roaming function. Some or all of the functions of the SMF entity 105 may be supported in a single instance of one SMF entity.

The UDM entity 109 stores the user's subscription data, policy data, and the like. The UDM entity 109 may include two parts, that is, an application front end (FE) and a user data repository (UDR).

The FE may include a UDM FE responsible for location management, subscription management, credential processing, etc., and a PCF entity responsible for policy control. The UDR stores data required for functions provided by the UDM-FE, and a policy profile required by the PCF entity. The data stored in the UDR includes a subscription identifier, a security credential, user subscription data including access and mobility-related subscription data and session-related subscription data, and policy data. The UDM-FE may access the subscription information stored in the UDR and support functions such as authentication credential processing, user identification handling, access authentication, registration/mobility management, subscription management, and SMS management.

The UPF entity 104 may transfer a downlink PDU, received from the DN 110, to the UE 101 via the (R)AN 102 and transfer an uplink PDU, received from the UE 101, to the DN 110 via the (R)AN 102. Specifically, the UPF entity 104 may support functions such as an anchor point for intra- and inter-RAT mobility, an external PDU session point for interconnection to a data network, packet routing and forwarding, a user plane part of packet inspection and policy rule enforcement, lawful intercept, and traffic usage reporting, uplink classifier for supporting the routing of traffic flows to the data network, branching points for supporting multi-homed PDU sessions, QoS handling for a user plane (e.g., packet filtering, gating, uplink/downlink rate enforcement), uplink traffic verification (SDF mapping between service data flow (SDF) and QoS flow), transport-level packet marking within uplink and downlink, downlink packet buffering, and downlink data notification triggering. Some or all of the functions of the UPF entity 104 may be supported within a single instance of one UPF.

The AF entity 107 may interwork with a 3GPP core network in order to provide services (supporting functions, for example, an application influence on traffic routing, access to network capability exposure, and interworking with a policy framework for policy control).

The (R)AN 102 refers to a new radio access network that supports both evolved E-UTRA, which is an evolved version of 4G radio access technology, and new radio (NR) technology (e.g., gNB).

The gNB may support functions, such as functions for radio resource management (i.e., radio bearer control, radio admission control, connection mobility control, and dynamic allocation of resources (i.e., scheduling) to the UE in an uplink/downlink), Internet protocol (IP) header compression, encryption and integrity protection of a user data stream, selection of the AMF upon attachment of the UE when routing to the AMF has not been determined based on information provided to the UE, user plane data routing to the UPF(s), control plane information routing to the AMF, connection setup and release, paging message scheduling and transmission (generated from the AMF), system broadcast information scheduling and transmission (generated from the AMF or operation and maintenance (O&M)), measurement and measurement report configuration for mobility and scheduling, transport level packet marking in the uplink, session management, support of network slicing, QoS flow management and mapping to a data radio bearer, support of the UE that is in an inactive mode, a distribution function of a NAS message, a NAS node selection function, radio access network sharing, dual connectivity, and tight interworking between the NR and the E-UTRA.

The UE 101 refers to a user equipment. The user equipment may be referred to as terms such as terminal, mobile equipment (ME), or mobile station (MS). Furthermore, the user equipment may be a portable device, such as a laptop, a mobile phone, a personal digital assistant (PDA), a smartphone, or a multimedia device, or may be a non-portable device, such as a personal computer (PC) or a vehicle-mounted device.

The NEF entity 113 may provide a means for securely exposing services and capabilities provided by 3GPP network functions, such as those for third parties, internal exposure/re-exposure, application functions, and edge computing. The NEF entity 113 may receive information (based on the exposed capability (capabilities) of the other NF(s)) from the other NF(s). The NEF entity 113 may store the received information as structured data by using a standardized interface to a data storage network function. The stored information may be re-exposed by the NEF entity 113 to other NF entity(entities) and AF entity (entities) and used for other purposes such as analysis.

The NRF entity 115 supports a service discovery function. The NRF entity 115 may receive an NF discovery request from an NF instance, and provide information about a discovered NF instance to the NF instance. In addition, the NRF entity 115 maintains available NF instances and services supported by the available NF instances.

For the sake of descriptive convenience FIG. 1 illustrates a reference model for a case where the UE 101 accesses one DN 110 by using one PDU session, but the disclosure is not limited thereto.

The UE 101 may use multiple PDU sessions to access, for example, two (i.e., local and central) data networks simultaneously. In this case, two SMFs may be selected for different PDU sessions. However, each SMF may be capable of controlling both the local UPF and central UPF in the PDU session.

in addition, the UE 101 may simultaneously access, for example, two (i.e., local and central) data networks provided within a single PDU session.

In 3GPP systems, conceptual links connecting NFs in the 5G system are defined as reference points. As an example, reference points included in the 5G system 100 of FIG. 1 are as follows.
- N1: A reference point between a UE 101 and an AMF 103
- N2: A reference point between an (R)AN 102 and an AMF 103
- N3: A reference point between an (R)AN 102 and a UPF 104
- N4: A reference point between an SMF 105 and a UPF 104
- N5: A reference point between a PCF 106 and an AF 107
- N6: A reference point between a UPF 104 and a DN 110
- N7: A reference point between an SMF 105 and a PCF 106
- N8: A reference point between a UDM 109 and an AMF 103
- N9: A reference point between two core UPFs 104
- N10: A reference point between a UDM 109 and an SMF 105
- N11: A reference point between an AMF 103 and an SMF 105
- N12: A reference point between an AMF 103 and an AUSF 108
- N13: A reference point between a UDM 109 and an AUSF 108
- N14: A reference point between two AMFs 103
- N15: A reference point between a PCF and an AMF for a non-roaming scenario, and a reference point between a PCF and an AMF in a visited network for a roaming scenario

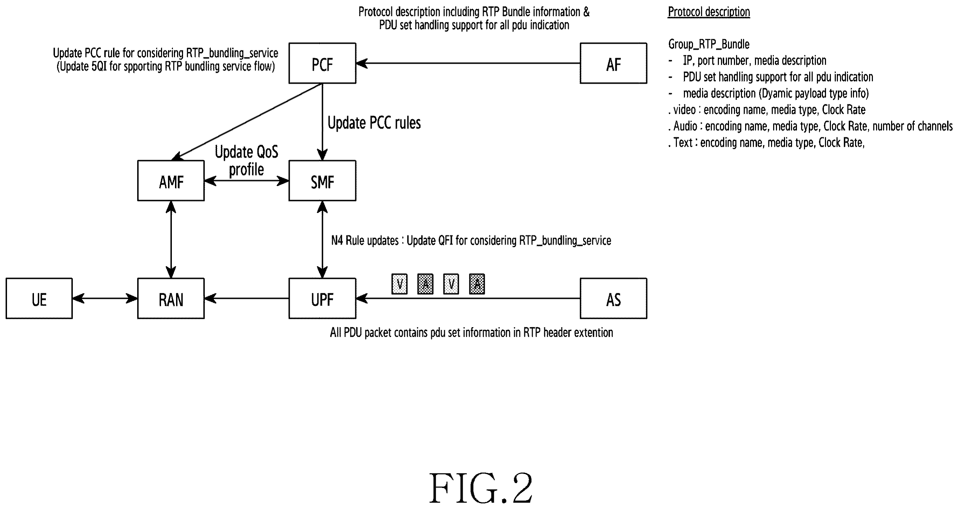

FIG. 2 illustrates an operation for performing RAN scheduling based on PDU set handling of different media type (e.g., video, audio, etc.) packets within a single service flow in a wireless communication system according to an embodiment of the disclosure.

Referring to FIG. 2, in order to request a service based on PDU set handling of the corresponding service flow, the AF entity may generate a protocol descriptor including information such as PDU set handling indication and codec of packets for each media type, sampling rate, media composition type within the service flow (Group_RTP_Bundle), and whether PDU set handling is provided for packets within the service flow from the AS (PDU set handling support for all PDU indication), and transfer the same to the PCF entity.

In FIG. 2, the PCF entity may determine whether to accept the corresponding request based on the PDU set handling recognizer and information transferred from the AF entity, and then if the corresponding service request is acceptable, the PCF entity may transfer, to the SMF, generated/updated PCC rules together with the PDU set handling recognizer and related information transferred from the AF at the time of PCC rule generation/update. If the PCF entity is unable to support the PDU set handling service of the corresponding service flow, which uses RTP bundling including different media types, based on the service requirements transferred from the AF entity, a rejection message for the request may be transferred to the AF entity as a response to the AF requirement-related message. If the AF is unable to support the PDU set handling service of the service flow, which uses the corresponding RTP bundling, the AF may transfer the rejection message to the AS, so that the packets of different media types of the corresponding service may be provided as services by using respective service flows.

In FIG. 2, if the PCF entity has determined to provide the corresponding service by using RTP bundling, the update of the QoS of the corresponding service flow may be determined based on a new QoS reflecting the characteristics of the bundled service flow, and may be included in the updated PCC rule. The PCF entity may recognize that separate processing of the packets in the corresponding service flow, based on PDU set handling, is to be performed in the RAN, from the PDU set handling indicator received from the AF entity, and to support this, the PCF may generate PDU set QoS profiles of packets transmitted in the RTP-bundled service flow, based on a protocol descriptor or pre-defined information, and may include the same in PCC rule generation or updating.

If there is no indicator (PDU set information support indication) indicating that PDU set information is provided in all packets within the protocol description transferred to the AF or in the case of a video packet, PDU set information is provided in the packet header extension field, and in the case of an audio packet, PDU set information may not be separately provided from the AS. In this case, the UPF entity must generate PDU set information for the audio packet, and in this case, since the PDU set QoS profile is transmitted as a single packet in the case of interactive audio, mapping may be performed in the same way as the existing QoS profile. That is, for PDU set handling of the audio packets, the PDU set delay budget (PSDB) within the PDU set QoS profile of the audio packets may be mapped to a packet delay budget (PDB) value within a QoS profile, and the PDU set error rate (PSER) may be mapped to a packet error rate (PER) value. In addition, the PDU set importance value between the PDU sets of the corresponding audio packet may be generated by using the value of the priority level within the basic 5QI of each media service characteristic. For example, when the QoS characteristic values mapped to 5QI are used, the media characteristics may be considered to configure audio (5QI = 1) and video (5QI = 2) and if the priority levels are configured to 20 and 40, respectively, the PDU set importance value for the audio packet may be configured to be higher than that for the video packet. However, in the case of an RTP bundle, since a separate QoS value for supporting the RTP bundle is configured, the standard 5QI value for each media type may be used only in the operation for generating PDU set information for a corresponding media type, when there is a packet for which PDU set information is not separately provided by the AS among packets in the RTP bundle service flow.

The PCF entity may transfer, to the SMF entity, a PCC rule including updated QoS information based on PDU set QoS profile and RTP bundling-related information for supporting a PDU set handling service in the RAN, protocol descriptor information indicating that PDU set information is included in a header extension field of the packets in the UPF entity, and the like.

The SMF entity may generate an updated QFI and QoS rule, SDF template, and the like by using the QoS information of the RTP-bundled service flow, based on the PCC rule transferred from the PCF entity, and transfer the generated information to the RAN and the UPF entity. The SMF entity may transfer, to the RAN, information for RAN scheduling based on PDU set handling, such as a PDU set QoS profile and QFI, a QoS rule, and a QoS profile, which have been transferred through the PCC rule. In addition, the SMF entity may transfer, to the UPF entity, information on whether the updated QFI value and PDU set information are transmitted from the AS within the packet detection rule (PDR) of the service flow through the N4 rule update, and the rule for including the corresponding PDU set information within the GTP-U header confirmation field.

When an RTP-bundled service flow is input thereafter, the UPF entity may include PDU set information in the GTP-U header confirmation field and transfer the same to the RAN. In addition, the QFI value transferred from the SMF may be marked as the QoS flow of the RTP-bundled QoS information, based on the updated QoS information considering RTP bundling, based on the information inside the N4 rule.

The RAN may perform a scheduling operation for packets within an RTP-bundled QoS flow in units of PDU sets, based on the PDU set QoS profile and PDU set information transferred from the SMF and UPF entities, in case of a congestion situation.

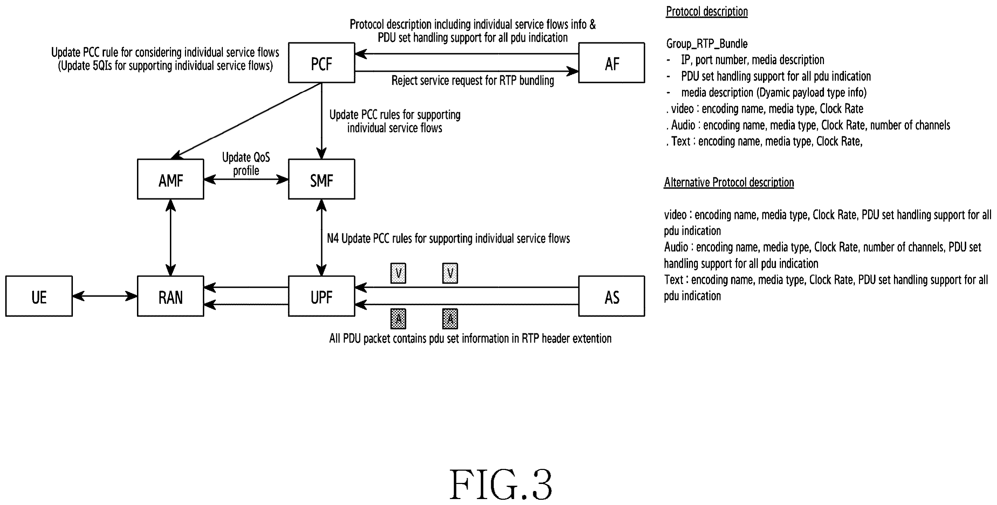

FIG. 3 illustrates an operation when a PCF has rejected a service request transferred from an AF in a wireless communication system according to an embodiment of the disclosure.

FIG. 3 illustrates an operation in which the AF entity provides relevant information for performing RAN scheduling based on PDU set handling of different media type (e.g., video, audio, etc.) packets within a single service flow and an operation in which the PCF has rejected service provision through RTP bundling upon reception of the same in a wireless communication system according to an embodiment of the disclosure.

Referring to FIG. 3, in order to request a service based on PDU set handling of the corresponding service flow, the AF entity may generate a protocol descriptor including information such as PDU set handling indication and codec of packets for each media type, sampling rate, media composition type within the service flow (Group_RTP_Bundle), and whether PDU set handling is provided for packets within the service flow from the AS (PDU set handling support for all PDU indication), and transfer the same to the PCF. In addition, in consideration of a case in which the RTP bundling request is rejected, an alternative protocol descriptor may be included in the protocol descriptor or separately transmitted to the PCF. In this case, the alternate protocol descriptor may include information in which media characteristic information within the protocol descriptor for RTP bundling is distinguished as respective service flow-specific protocol descriptors.

In FIG. 3, the PCF entity may determine whether to accept the corresponding request based on the PDU set handling recognizer and information transferred from the AF entity, and then if the corresponding service request is acceptable, the PCF entity may transfer, to the SMF entity, generated/updated PCC rules together with the PDU set handling recognizer and related information transferred from the AF entity at the time of PCC rule generation/update. If the PCF entity is unable to support the PDU set handling service of the corresponding service flow, which uses RTP bundling including different media types, based on the service requirements transferred from the AF entity, a rejection message for the request may be transferred to the AF entity as a response to the AF requirement-related message. If the AF is unable to support the PDU set handling service of the service flow, which uses the corresponding RTP bundling, the AF may transfer the rejection message to the AS, so that the packets of different media types of the corresponding service may be provided as services by using respective service flows.

In FIG. 3, if the PCF entity has determined that a service through RTP bundling cannot be provided or is not to be provided, the PCF may determine a PCC rule update based on alternative protocol descriptor information transferred from the AF. In addition, the PCF entity may transfer, to the AF entity, that the service through the corresponding RTP bundling has been rejected in the response to the service request message transferred from the AF entity. The AF entity received the service rejection result may inform the AS that packets having different media types composing the corresponding service should be transmitted to respective service flows. The AS may, after receiving a service request using an individual service flow from the AF entity, include PDU set information in the packet header extension field for each service flow and transfer the same to the UPF entity. The PCF entity may recognize that PDU set handling-based processing of packets in the corresponding service flow is to be performed in the RAN from the PDU set handling indicator transferred from the AF entity, and in order to support this, the PCF may generate PDU set QoS profiles for each service flow, based on an alternative protocol descriptor or pre-defined information, and include the same when generating or updating a PCC rule.

Thereafter, the PCF entity may transfer, to the SMF entity, a PCC rule including a PDU set QoS profile for PDU set handling service support in the RAN, and alternative protocol descriptor information indicating that PDU set information is included in the header extension field of the corresponding packets in the UPF entity.

The SMF entity may generate an updated QFI and QoS rule, SDF template, etc., by using QoS information of respective service flows, based on PCC rules transferred from the PCF entity, and may transfer the same to the RAN and UPF. The SMF entity may transfer, to the RAN, information for RAN scheduling based on PDU set handling, such as PDU set QoS profile and QFI, QoS rule, and QoS profile for each service flow received through the PCC rule. In addition, the SMF entity may transfer, to the UPF entity, information on whether the updated QFI value and PDU set information are transmitted from AS (PDU set handling support for all PDU indication) within the packet detection rule (PDR) of each service flow through N4 rule update, and the rule for including the corresponding PDU set information within the GTP-U header confirmation field.

Thereafter, if each service flow is transferred to the UPF entity, the UPF entity may mark the PDU set information in the packet header extension field in the GTP-U header confirmation field, and transfer the same to the RAN. In addition, the UPF entity may mark the QFI value transferred from the SMF entity for each QoS flow based on the updated QoS information for each service flow considering the respective media characteristics based on the information in the N4 rule.

The RAN may perform a scheduling operation for packets in the QoS flow by PDU set unit when a congestion situation occurs, based on the PDU set QoS profile and PDU set information transferred from the SMF and UPF entities.

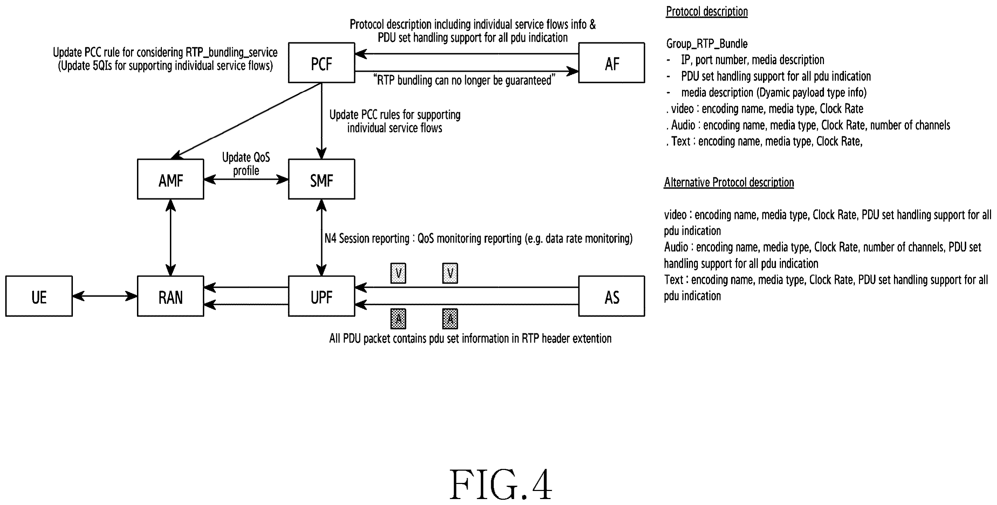

FIG. 4 illustrates a policy update operation based on QoS monitoring report information through QoS monitoring during service utilization through RTP bundling in a wireless communication system according to an embodiment of the disclosure.

Specifically, in a wireless communication system according to an embodiment of the disclosure, FIG. 4 illustrates an operation in which the AF provides relevant information for performing RAN scheduling based on PDU set handling of different media type (e.g., video, audio, etc.) packets within a single service flow and an operation when the AF cannot provide RTP bundling anymore in the corresponding QoS flow through QoS monitoring during service use through RTP bundling.

Referring to FIG. 4, in order to request a service based on PDU set handling of the corresponding service flow, the AF entity may generate a protocol descriptor including information such as PDU set handling indication and codec of packets for each media type, sampling rate, media composition type within the service flow (Group_RTP_Bundle), and whether PDU set handling is provided for packets within the service flow from the AS (PDU set handling support for all PDU indication), and transfer the same to the PCF. In addition, in consideration of a case in which the RTP bundling request is rejected, an alternative protocol descriptor may be included in the protocol descriptor or separately transmitted to the PCF. In this case, the alternate protocol descriptor may include information in which media characteristic information within the protocol descriptor for RTP bundling is distinguished as respective service flow-specific protocol descriptors.

In FIG. 4, the PCF entity may determine whether to accept the corresponding request based on the PDU set handling recognizer and information transferred from the AF entity, and then if the corresponding service request is acceptable, the PCF entity may transfer, to the SMF entity, generated/updated PCC rules together with the PDU set handling recognizer and related information transferred from the AF entity at the time of PCC rule generation/update.

If the PCF entity has determined to provide the corresponding service by using RTP bundling, the update of the QoS of the corresponding service flow may be determined based on a new QoS reflecting the characteristics of the bundled service flow, and may be included in the updated PCC rule. The PCF entity may recognize that separate processing of the packets in the corresponding service flow, based on PDU set handling, is to be performed in the RAN, from the PDU set handling indicator received from the AF entity, and to support this, the PCF may generate PDU set QoS profiles of packets transmitted in the RTP-bundled service flow, based on a protocol descriptor or pre-defined information, and may include the same in PCC rule generation or updating. Thereafter, the PCF entity may transfer, to the SMF, a PCC rule including updated QoS information based on PDU set QoS profile and RTP bundling-related information for supporting a PDU set handling service in the RAN, protocol descriptor information indicating that PDU set information is included in a header extension field of the packets in the UPF entity, and the like.

The SMF entity may generate an updated QFI and QoS rule, SDF template, and the like by using the QoS information of the RTP-bundled service flow, based on the PCC rule transferred from the PCF entity, and transfer the generated information to the RAN and the UPF entity. The SMF entity may transfer, to the RAN, information for RAN scheduling based on PDU set handling, such as a PDU set QoS profile and QFI, a QoS rule, and a QoS profile, which have been transferred through the PCC rule. In addition, the SMF entity may transfer, to the UPF entity, information on whether the updated QFI value and PDU set information are transmitted from the AS within the packet detection rule (PDR) of the service flow through the N4 rule update, and the rule for including the corresponding PDU set information within the GTP-U header confirmation field.

When an RTP-bundled service flow is input thereafter, the UPF entity may include PDU set information in the GTP-U header confirmation field and transfer the same to the RAN. In addition, the QFI value transferred from the SMF entity may be marked as the QoS flow of the RTP-bundled QoS information, based on the updated QoS information considering RTP bundling, based on the information inside the N4 rule.

The RAN may perform a scheduling operation for packets within an RTP-bundled QoS flow in units of PDU sets, based on the PDU set QoS profile and PDU set information transferred from the SMF and UPF entities, in case of a congestion situation.

As described above, during service utilization by using the RTP-bundled service flow, through QoS monitoring reporting such as data rate monitoring values from a RAN or UPF entity, the PCF entity may recognize the difficulty in utilizing the service through the RTP bundling and may determine to change the service policy by using individual service flows for each media type.

Requirements for QoS monitoring may be included by the PCF entity when generating or updating a PCC rule. The reporting threshold of a data rate monitoring value, etc. when performing QoS monitoring of a QoS flow using RTP bundling may be received through the AF entity or determine the QoS monitoring requirements of the RTP-bundled QoS flow based on the network operator's policies, and based on this QoS monitoring of the QoS flow may be performed in a PCC rule by a RAN or UPF entity. In addition, the QoS monitoring requirement may request the corresponding QoS monitoring reporting value to be reported to the SMF entity to use the corresponding value in the PCF entity, and the PCF entity may receive the corresponding QoS monitoring reporting value again from the SMF entity through a separate policy control reporting trigger (PCRT) or the like when the corresponding QoS monitoring reporting value is transferred to the SMF entity.

The PCF entity may determine, based on a QoS monitoring reporting value transferred from the RAN or UPF entity, that the RTP-bundled QoS service may no longer be provided, based on the QoS monitoring requirements. In this case, the PCF may determine a media type-based service flow generation, based on the alternate protocol descriptor information in the service requirement message through the existing AF's RTP bundling, and perform a PCC rule update operation based on the corresponding information.

The PCF entity may transfer, to the AF entity, a PCF event reporting result the result including information that RTP bundling may no longer be guaranteed ("RTP bundling can no longer be guaranteed"). The reported result value may be used by the AF entity to transfer the RTP bundling service requirements, and then request a PCF event-related reporting subscription regarding RTP bundling to the PCF entity, so that the PCF entity may notify the AF entity of the event-related information when an RTP bundling-related event occurs.

In FIG. 4, if the PCF entity has determined that a service through RTP bundling cannot be provided or is not to be provided, the PCF entity may determine a PCC rule update based on alternative protocol descriptor information transferred from the AF.

The AF entity having received the event notification message from the PCF entity may inform the AS that packets having different media types composing the corresponding service should be transmitted to respective service flows.

The AS may, after receiving a service request using an individual service flow from the AF entity, include PDU set information in the packet header extension field for each service flow and transfer the same to the UPF entity.

The PCF entity may recognize that PDU set handling-based processing of packets in the corresponding service flow is to be performed in the RAN from the PDU set handling indicator transferred from the AF entity, and in order to support the PDU set handling-based processing, the PCF may generate PDU set QoS profiles for each service flow, based on an alternative protocol descriptor or pre-defined information, and include the same when generating or updating a PCC rule.

The PCF entity may transfer, to the SMF entity, a PCC rule including a PDU set QoS profile for PDU set handling service support in the RAN, and alternative protocol descriptor information indicating that PDU set information is included in the header extension field of the corresponding packets in the UPF entity.

The SMF entity may generate an updated QFI and QoS rule, SDF template, etc., by using QoS information of respective service flows, based on PCC rules transferred from the PCF entity, and may transfer the same to the RAN and UPF. The SMF entity may transfer, to the RAN, information for RAN scheduling based on PDU set handling, such as PDU set QoS profile and QFI, QoS rule, and QoS profile for each service flow received through the PCC rule.

The SMF entity may transfer, to the UPF entity, information on whether the updated QFI value and PDU set information are transmitted from AS (PDU set handling support for all PDU indication) within the packet detection rule (PDR) of each service flow through N4 rule update, and the rule for including the corresponding PDU set information within the GTP-U header confirmation field.

Thereafter, if each service flow is transferred to the UPF, the UPF entity may mark the PDU set information in the packet header extension field in the GTP-U header confirmation field, and transfer the same to the RAN. In addition, the UPF entity may mark the QFI value transferred from the SMF entity for each QoS flow based on the updated QoS information for each service flow considering the respective media characteristics based on the information in the N4 rule.

The RAN may perform a scheduling operation for packets in the QoS flow by PDU set unit when a congestion situation occurs, based on the PDU set QoS profile and PDU set information transferred from the SMF and UPF entities.

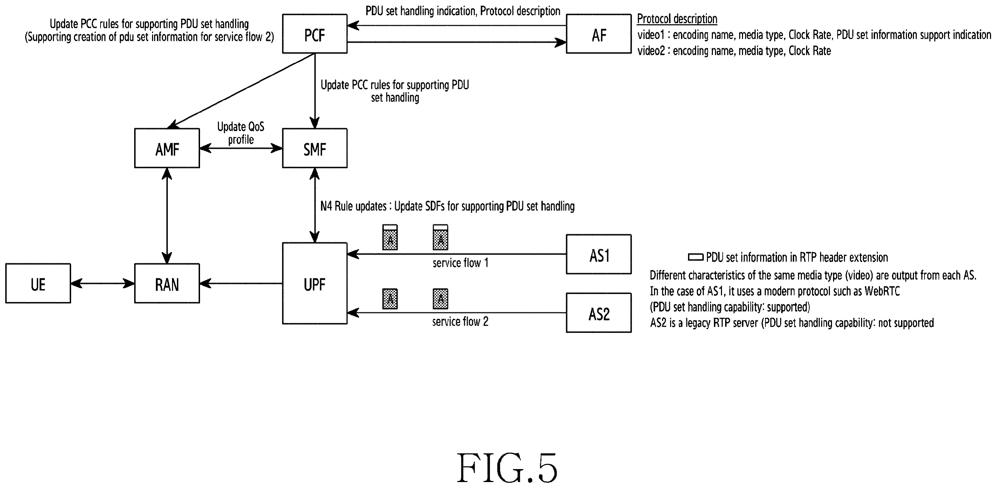

FIG. 5 illustrates an operation for performing PDU set-based RAN scheduling on a packet transmitted through one or more service flows having the same media type.

The PCF entity may recognize that PDU set handling-based processing of packets in the corresponding service flow is to be performed in the RAN from the PDU set handling indicator in the service requirements transferred from the AF entity. In addition, for PDU set information generation or recognition for PDU set handling, the AF entity may recognize from the AF entity whether packets within the corresponding service layer include PDU set information in the header extension field or whether PDU set information needs to be generated by the UPF based the information in the protocol descriptor. For example, in FIG. 5, the PCF entity may recognize that, in the case of service flow 1 which transmits packets of video 1 transferred from AS1, PDU set information is transferred from AS1, and may recognize that, in the case of service flow 2 which transmits packets of video 2 transferred from AS2, no separate PDU set information is generated and provided in AS2, through information in a protocol descriptor.

The PCF entity may generate a PDU set QoS profile based on a protocol descriptor or pre-defined information to support PDU set handling, and may include the same when generating or updating a PCC rule.

The PCF entity may transfer the PDU set QoS profile for supporting a PDU set handling service in the RAN and the characteristic information of service flows transferred to the UPF. For example, in FIG. 5, the PCF entity may transfer, to the SMF, an indicator (PDU set information support indication) indicating that a separate PDU set information generation operation is not required because PDU set information is included in the RTP header extension for service flow 1, and PCC rules including relevant information for performing a separate PDU set information generation for service flow 2.

The SMF entity may generate an updated QFI and QoS rule, SDF template, etc., based on PCC rules transferred from the PCF entity, and may transfer the same to the RAN and UPF.

The SMF entity may transfer, to the RAN, information for RAN scheduling based on PDU set handling, such as a PDU set QoS profile and QFI, a QoS rule, and a QoS profile, which have been transferred through the PCC rule.

The SMF entity may transfer, to the UPF entity, information on whether the updated QFI value and PDU set information are transmitted from AS (PDU set handling support for all PDU indication) within the packet detection rule (PDR) of each service flow through N4 rule update, the rule for including the corresponding PDU set information within the GTP-U header confirmation field, and information related to PDU set information generation for a corresponding service flow and generation thereof when no separate PDU set information is provided.

Thereafter, if packets of each of the service flows are transferred to the UPF, the UPF entity may mark the PDU set information in the packet header extension field for service flow 1 in the GTP-U header confirmation field and transfer the same to the RAN. In the case of service flow 2, PDU set information may be generated, and this may be marked in a GTP-U header confirmation field and then transferred to the RAN.

The UPF entity may mark packets, which are transferred through the service flows that are updated and different from each other considering the same media characteristics, by using related QoS information in order to transfer the same to the same QoS flow based on information in the N4 rule.

The RAN may perform a scheduling operation for packets in the QoS flow by PDU set unit when a congestion situation occurs, based on the PDU set QoS profile and PDU set information transferred from the SMF and UPF entities.

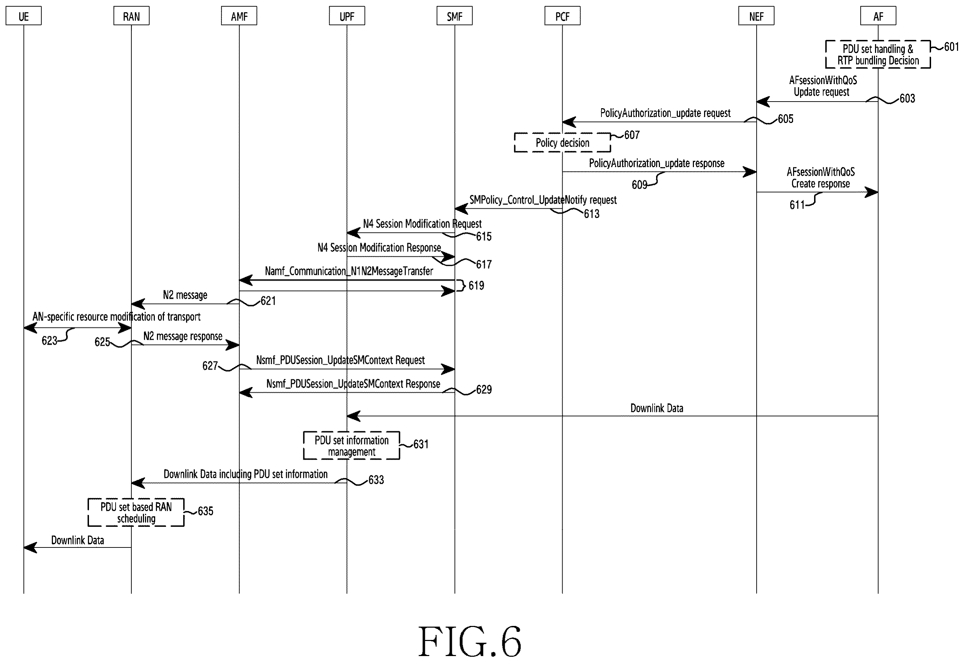

FIG. 6 is a flowchart illustrating a method for supporting scheduling of an RTP-bundled (or multiplexed) service by using a protocol description including RTP bundling (or multiplexing)-related information transferred through an AF entity in a wireless communication system according to an embodiment of the disclosure.

In step 601, the AF entity may determine support for a PDU set-based service, which supports scheduling in a RAN by using a PDU set handling function and PDU set information according to the user's selection or a service provider's policy, and support for an RTP bundling service (or a multiplexing service) to transmit packets having different media types in a single service flow.

In step 603, based on the information determined in step 601, the AF entity may transmit, to the NEF entity, PDU set handling-related information including a PDU set handling indication and a protocol description to be used for PDU set-based service support, and receive a response therefor. PDU set handling-related information may be included in an AF session-related QoS requirement (AFsessionWithQoS) message that is transferred from the AF entity to the NEF entity.

PDU set handling-related information may be composed of a protocol descriptor including information such as a PDU set handling indication in an AF session-related QoS requirement request message, codecs of packets for each media type, a sampling rate, a media composition type (Group_RTP_Bundle) in a service flow, an indicator (PDU set handling support for all PDU indication) indicating whether the PDU set handling is provided for packets in the corresponding service flow received from an application server (AS) entity, and the like.

In step 605, the NEF entity may transfer, to the PCF entity, PDU set handling information to be used when supporting a service based on a PDU set received from an AF entity or requirements (such as PDU set information generation and related parameters) by using a policy authorization (PolicyAuthorization) message. If a separate policy authorization service procedure has not been performed through the existing service, the service-related PDU set handling support information transferred through the policy authorization generation (Npcf_PolicyAuthorization_Create) request message or, if there is an existing generated service procedure, through the policy authorization update (Npcf_PolicyAuthorization_Update) request message may be transferred to the PCF entity. In addition, a request for the RTP bundling event reporting may be made through a policy authorization subscription (Npcf_PolicyAuthorization_Subscribe) request message in order to receive an RTP bundling related reporting event message generated by the PCF to receive an RTP bundling service-related reporting additionally.

In step 607, the PCF entity may determine whether to accept the RTP bundling-based service request or RTP bundling-based PDU set handling service request based on the PDU set handling recognizer and information transferred from the AF entity, and then if the RTP bundling-based service request form the AF entity is acceptable, the PCF entity may transfer, to the SMF entity, generated/updated PCC rules together with the PDU set handling recognizer and related information transferred from the AF entity at the time of PCC rule generation/update. If the PCF entity is unable to support the PDU set handling service of the corresponding service flow, which uses RTP bundling including different media types, based on the service requirements transferred from the AF entity, a rejection message for the RTP bundling-based service request may be transferred to the AF entity as a response to the AF requirement-related message through steps 609 and 611. If the AF entity is unable to support the PDU set handling service of the service flow, which uses the corresponding RTP bundling, the AF entity may transfer the rejection message to the AS, so that the packets of different media types of the corresponding service may be provided as services by using respective service flows.

In step 607, if the PCF entity has determined to provide the corresponding service by using RTP bundling, the update of the QoS of the corresponding service flow may be determined based on a new QoS reflecting the characteristics of the bundled (or multiplexed) service flow, and may be included in the updated PCC rule. The PCF entity may recognize that separate processing of the packets in the corresponding service flow, based on PDU set handling, is to be performed in the RAN, from the PDU set handling indicator received from the AF entity, and to support this, the PCF may generate PDU set QoS profiles of packets transmitted in the RTP-bundled service flow, based on a protocol descriptor or pre-defined information, and may include the same in PCC rule generation or updating.

Through steps 603 and 605, if there is no indicator (PDU set information support indication) indicating that PDU set information is provided in all packets within the protocol description transferred from the AF entity or in the case of a video packet, PDU set information is provided individually in the packet header extension field, and in the case of an audio packet, PDU set information may not be separately provided from the AS. The UPF entity may perform PDU set information generation for audio packets for which separate PDU set information is not provided from the AS. In addition, the PCF entity may perform mapping in the same way as the existing QoS profile for interactive audio transmitted as a single packet when generating a PDU set QoS profile for the audio packet. That is, for PDU set handling of the audio packets, the PDU set delay budget (PSDB) within the PDU set QoS profile of the audio packets may be mapped to a packet delay budget (PDB) value within a QoS profile, and the PDU set error rate (PSER) may be mapped to a packet error rate (PER) value. In addition, the PDU set importance value between the PDU sets of the corresponding audio packet may be generated by using the value of the priority level within the basic 5QI of each media service characteristic. For example, when the QoS characteristic values mapped to 5QI are used, the media characteristics may be considered to configure audio (5QI = 1) and video (5QI = 2) and if the priority levels are configured to 20 and 40, respectively, the PDU set importance value for the audio packet may be configured to be higher than that for the video packet. However, in the case of an RTP bundle, since a separate QoS value for supporting the RTP bundle is configured, the standard 5QI value for each media type may be used only in the operation for generating PDU set information for a corresponding media type, when there is a packet for which PDU set information is not separately provided by the AS among packets in the RTP bundle service flow.

In steps 609 and 611, the PCF entity may inform that the policy update request related to the PDU set handling service through RTP bundling has been accepted by responding with a policy authorization update request and an AF session requirement update request message based on the service requirements received from the AF entity through steps 603 and 605.

In step 613, the PCF entity may transfer, to the SMF entity, an updated PCC rule including updated QoS information based on PDU set QoS profile and RTP bundling-related information for supporting a PDU set handling service in the RAN, protocol descriptor information indicating that PDU set information is included in a header extension field of the packets in the UPF entity, and the like through the session policy control update notification (Npcf_SMPolicyControl_UpdateNotify) request message.

In steps 615 and 617, the SMF entity may transfer, to the UPF through an N4 session modification request message, PDU set handling information including PDU set information detection rules and related parameter information for PDU set-based service support received from the PCF in step 613, and may receive a response. The N4 session modification request message may include a packet detection rule (PDR).

In step 619, the SMF entity may transfer, to the AMF entity through an N1N2 message transfer (Namf_Communication_N1N2MessageTransfer) message, an N2 SM information and N1 SM container including QFI and QoS rule, etc. updated by using QoS information of an RTP-bundled service flow, based on the PCC rule transferred from the PCF entity in step 613.

In step 621, the AMF entity may transfer, to the RAN by using an N2 message, N2 SM information and an N1 SM container including the updated QFI and QoS rules, and a PDU set QoS profile for supporting the RTP bundling service and the PDU set handling service, which are received from the SMF entity in step 619.

In step 623, the RAN may transfer an N1 SM container including an updated QoS rule and the like to the UE to support the RTP bundling service.

In steps 625 to 629, the RAN may transmit a response message to the N2 message to the AMF entity in response to the N2 message, and the AMF entity may transmit and receive, to and from the SMF entity, a message indicating that the N2 SM information and N1 SM container including an updated QFI and QoS rule have been reflected based on the received response message of the N2 message.

In step 631, the UPF entity may detect PDU set information in the RTP packet header extension field, which is transferred to the UPF entity through the N6 section from the AS inside the DN. The UPF entity may transfer the detected PDU set information to the RAN through a GTP-U header. Specifically, the PDU set information may be configured by at least one of a PDU set sequence number (SN), an end PDU of the PDU set, a PDU set size in bytes, a PDU SN within a PDU set, and a PDU set importance.

In step 633, the UPF entity may transfer downlink data including PDU set information to the RAN.

In step 635, the RAN may perform a scheduling operation for packets in the RTP-bundled QoS flow by PDU set unit when congestion occurs based on the PDU set QoS profile and PDU set information received in step 621.

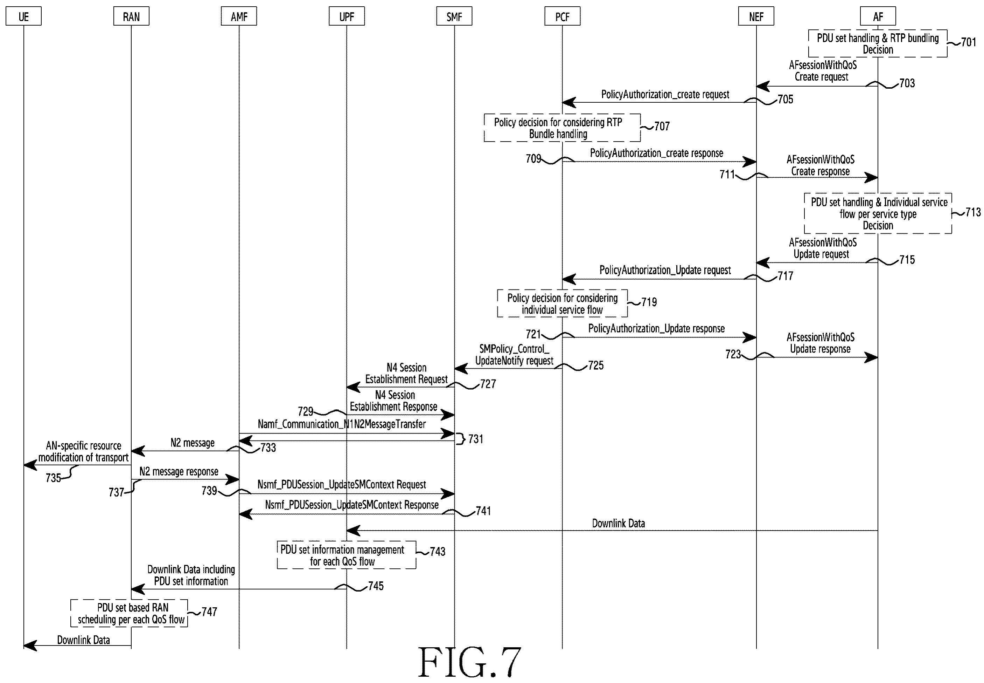

FIG. 7 is a flowchart illustrating a method for supporting PDU set-based RAN scheduling when an RTP bundling-based service request transferred from an AF entity to a PCF entity is rejected, in a wireless communication system according to an embodiment of the disclosure.

In step 701, the AF entity may determine support for a PDU set-based service, which supports scheduling in a RAN by using a PDU set handling function and PDU set information according to the user's selection or a service provider's policy, and support for an RTP bundling service to transmit packets having different media types in a single service flow.

In step 703, based on the information determined in step 701, the AF entity may transmit, to the NEF entity, PDU set handling-related information including a PDU set handling indication and a protocol description to be used for PDU set-based service support, and receive a response therefor.

PDU set handling-related information may be composed of a protocol descriptor including information such as a PDU set handling indication in an AF session-related QoS requirement request message 602, codecs of packets for each media type, a sampling rate, a media composition type (Group_RTP_Bundle) in a service flow, information on whether the PDU set handling is provided for packets in the corresponding service flow received from the AS (PDU set handling support for all PDU indication), and the like.

In step 705, the NEF entity may transfer, to the PCF entity, PDU set handling information to be used when supporting a service based on a PDU set received from an AF entity or requirements (such as PDU set information generation and related parameters) by using a policy authorization (PolicyAuthorization) message. If a separate policy authorization service procedure has not been performed through the existing service, the service-related PDU set handling support information transferred through the policy authorization generation (Npcf_PolicyAuthorization_Create) request message or, if there is an existing generated service procedure, through the policy authorization update (Npcf_PolicyAuthorization_Update) request message may be transferred to the PCF entity. In addition, a request for the RTP bundling event reporting may be made through a policy authorization subscription (Npcf_PolicyAuthorization_Subscribe) request message in order to receive an RTP bundling related reporting event message generated by the PCF to receive an RTP bundling service-related reporting additionally.

In step 707, the PCF entity may determine to reject the corresponding service request, based on the PDU set handling-related service requirements considering RTP bundling transferred from the AF entity.

In step 709 and step 711, the determination that the request for supporting PDU set handling service through RTP bundling in step 707 has been rejected by the PCF may be notified through a policy authorization update request and an AF session-related requirements update request message response.

In order to request a service based on PDU set handling of the corresponding service flow, the AF entity may generate a protocol descriptor including information such as PDU set handling indication and codec of packets for each media type, sampling rate, media composition type within the service flow (Group_RTP_Bundle), and whether PDU set handling is provided for packets within the service flow from the AS (PDU set handling support for all PDU indication), and transfer the same to the PCF entity.

In addition, in consideration of a case in which the RTP bundling request is rejected, an alternative protocol descriptor may be included in the protocol descriptor or separately transmitted to the PCF. In this case, the alternate protocol descriptor may include information in which media characteristic information within the protocol descriptor for RTP bundling is distinguished as respective service flow-specific protocol descriptors. If an alternative protocol descriptor considering the individual service flow is included in the service requirement message transferred from the AF entity to the PCF entity in steps 703 and 705, steps 713 to 717 may be omitted.

In step 713, the AF entity may use different service flows to determine whether a PDU set handling service is supported for each service flow, for packets of different media types, respectively.

In step 715, based on the information determined in step 713, the AF entity may transmit, to the NEF entity, PDU set handling-related information including a PDU set handling indication and a protocol description to be used for PDU set-based service support, and receive a response therefor. The PDU set handling-related information may be included in an AF session-related QoS requirement (AFsessionWithQoS) message transmitted from the AF entity to the NEF entity.

PDU set handling-related information may be composed of a protocol descriptor including information such as a PDU set handling indication in an AF session-related QoS requirement request message 608, codecs of packets for each media type, a sampling rate, a media composition type (Individual service flows) in a service flow, information on whether the PDU set handling is provided for packets in each service flow (PDU set handling support for all PDU indication), and the like. The AS may, after receiving a service request using an individual service flow from the AF entity, include PDU set information in the packet header extension field for each service flow and transfer the same to the UPF entity.

In step 717, the NEF entity may transfer, to the PCF entity, PDU set handling information to be used when supporting a service based on a PDU set received from an AF entity or requirements (such as PDU set information generation and related parameters) by using a policy authorization (PolicyAuthorization) message.

In step 719, the PCF entity may determine whether to accept the request for supporting PDU set handling when using a service through an individual service flow received from the AF entity, based on the recognizer and the protocol descriptor information for the individual service flow. If the PDU set handling service request through an individual service flow is acceptable, the recognizer for PDU set handling received from the AF and protocol descriptor information for each individual service flow may be included when generating/updating a PCC rule.

In steps 721 and 723, the RAN may transmit a response message indicating that individual service flow-based PDU set-based scheduling requests have been accepted based on the PDU set handling support requirements through individual service flows received through steps 715 and 717.

In step 725, the PCF may transfer, to the SMF entity, an updated PCC rule including updated QoS information for each service flow considering PDU set QoS profiles and media types for each service flow to support PDU set handling services in the RAN, protocol descriptor information indicating that PDU set information is included in a header extension field of the packets in the UPF entity, and the like through the session policy control update notification (Npcf_SMPolicyControl_UpdateNotify) request message.

In steps 727 and 729, the SMF entity may transfer, to the UPF through an N4 session modification request message, related information for PDU set handling including PDU set information detection rules and related parameter information for PDU set-based service support received from the PCF entity by individual service flow based on the updated PCC rule, and may receive a response. The N4 session modification request message may include a packet detection rule (PDR).

In step 731, the SMF entity may transfer N2 SM information including an updated QFI and QoS profile of individual service flows and a PDU set QoS profile, and an N1 SM container including a QoS rule of the individual service flow, to the AMF entity through an N1N2 message transfer (Namf_Communication_N1N2MessageTransfer) message, based on the PCC rule transferred from the PCF entity in step 725.

In step 733, the AMF entity may transfer, to the RAN by using an N2 message, N1 SM container including N2 SM information including updated QFIs and QoS profiles, PDU set QoS profiles, etc., for supporting PDU set handling of the service composed of individual service flows transferred in step 731, and QoS rules.

In step 735, the RAN may transfer an N1 SM container including updated QoS rules and the like to the UE to support a service composed of individual service flows.

In steps 737 to 741, the RAN may transmit a response message to the N2 message to the AMF entity, and the AMF entity may transmit and receive a message indicating that an N2 SM information including an updated QFI and QoS rules, and an N1 SM container have been reflected, to the SMF entity, based on the response message to the received N2 message.

In step 743, the UPF entity may detect PDU set information in the RTP packet header extension field, which is transferred to the UPF entity through the N6 section from the AS inside the DN. Thereafter, if packets of each service flow are transferred to the UPF entity, the UPF entity may mark the PDU set information in the packet header extension field in the GTP-U header confirmation field, and transfer the same to the RAN. In addition, the UPF entity may mark the QFI value transferred from the SMF entity for each QoS flow based on the updated QoS information for each service flow considering the respective media characteristics based on the information in the N4 rule. Specifically, the PDU set information may be configured by at least one of a PDU set sequence number (SN), an end PDU of the PDU set, a PDU set size in bytes, a PDU SN within a PDU set, and a PDU set importance.

In step 745, the UPF entity may transfer downlink data including PDU set information to the RAN.

In step 747, the RAN may perform a PDU set unit scheduling operation for packets within each QoS flow when congestion occurs based on the PDU set QoS profile and PDU set information for individual service flows received in step 733.

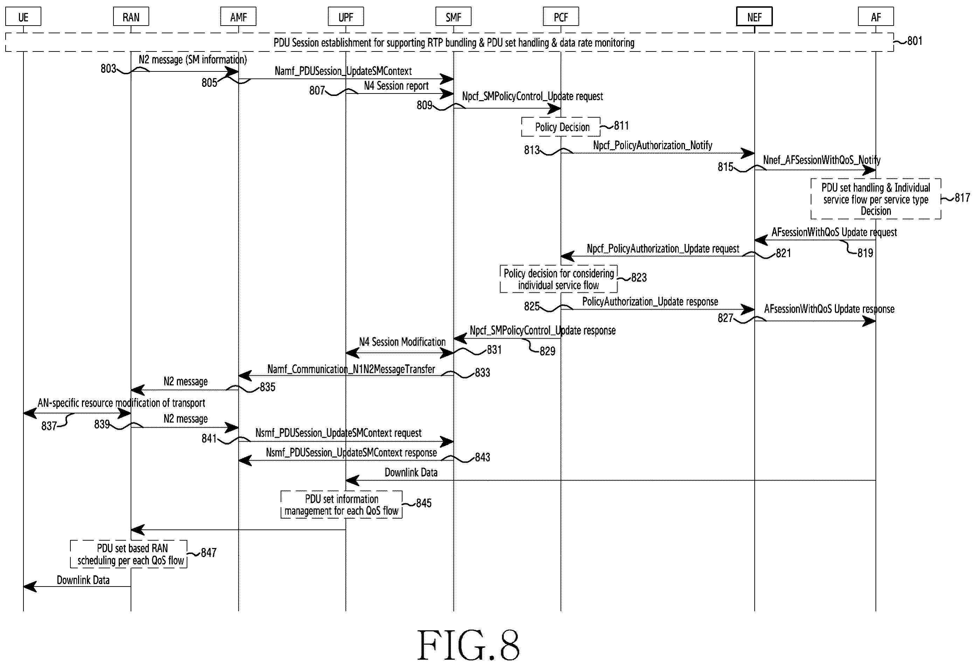

FIG. 8 is a flowchart illustrating a method for supporting policy update, during use of RTP-bundled basic services, based on a QoS monitoring reporting value in a wireless communication system according to an embodiment of the disclosure.

In step 801, as in FIG. 6, the AF entity may request support for PDU set handling based on an RTP-bundled service flow, and the PCF entity may determine a policy for RTP-bundled service flow-based PDU set scheduling operation in the RAN and transmit corresponding information to the SMF entity through PCC rule update, based on the corresponding service request. In this case, the SMF entity may transfer information for PDU set handling to the RAN and UPF, based on the updated PCC rule. Thereafter, the UPF entity may detect the PDU set information in the packet header extension field in the RTP bundled service flow, and mark the same in the GTP-U header extension field to transfer the same to the RAN. In addition, the RAN may perform PDU set-based scheduling of the RTP-bundled QoS flow by using a PDU set QoS profile transferred from the SMF entity and PDU set information transferred from the UPF.

In steps 803 to 807, QoS monitoring operations for data rate monitoring may be performed in a RAN or UPF entity according to QoS monitoring requirements.

In steps 803 to 805, when the data rate monitoring value of the RTP-bundled QoS flow data rate monitoring value exceeds a threshold during data rate monitoring based on the requirements for QoS monitoring in the updated PCC rule generated by the PCF entity in step 801, the RAN may transfer this to the SMF entity through QoS monitoring reporting. The data rate monitoring value in the requirements for QoS monitoring may include threshold information, and the requirements for QoS monitoring may be received through the AF or may be preconfigured according to a business policy.

In step 807, when the data rate monitoring value of the RTP-bundled QoS flow data rate monitoring value exceeds a threshold during data rate monitoring based on the requirements for QoS monitoring in the updated PCC rule generated by the PCF entity in step 801, the UPF entity may transfer QoS monitoring reporting information to the SMF entity through N4 session reporting.

In step 809, the SMF entity may transfer QoS monitoring reporting information of the RTP-bundled QoS flow to the PCF through an SM policy control (SMPolicyControl) update request. In addition, the QoS monitoring requirements may include a request for the QoS monitoring reporting information to be transmitted to the SMF entity, not directly to the AF entity or the like, in order to use the QoS monitoring reporting value in the PCF entity. The PCF entity may request the QoS monitoring reporting information to be transferred to the PCF entity when the QoS monitoring reporting information is transferred to the SMF entity through a separate policy control reporting trigger (PCRT) or the like.

In step 811, the PCF entity may determine that an RTP-bundled QoS service may no longer be provided, based on QoS monitoring requirements and QoS monitoring reporting information transferred from the RAN or the UPF entity, and then determine a policy update. In this case, when the PCF entity has received the alternative protocol descriptor information including the individual service flow information in the service requirement message through RTP bundling of the existing AF entity in step 801, if the PCF has determined that a service through RTP bundling cannot be provided or is not to be provided, the PCF entity may determine a PCC rule update based on alternative protocol descriptor information transferred from the AF. When the alternative protocol descriptor information is received in step 801 as described above, steps 819 and 821 may be omitted.

In steps 813 and 815, the PCF entity may transfer, to the AF entity, a PCF event reporting result including information that RTP bundling may no longer be guaranteed ("RTP bundling can no longer be guaranteed"). The PCF event reporting operation may include that, after the AF entity transmits the RTP bundling service requirements in step 801, the AF entity notify the PCF entity of the event-related information when an RTP bundling-related event occurs in a PCF entity, through a reporting subscription request for an RTP bundling-related PCF event to the PCF entity.

In step 817, the AF entity that has received the event notification message from the PCF entity may determine that packets having different media types constituting the service should be transmitted for each service flow. In addition, if the alternative protocol descriptor has not been transferred to the PCF entity in step 801, a protocol descriptor for individual service flows may be generated. The AF entity may then transfer a request for packet transmission per individual service flow to the AS. The AS may, after receiving a service request using an individual service flow from the AF entity, include PDU set information in the packet header extension field for each service flow and transfer the same to the UPF entity.

In step 819, based on the information determined in step 817, the AF entity may transmit, to the NEF entity, PDU set handling-related information including a PDU set handling indication and a protocol description to be used for PDU set-based service support. The PDU set handling-related information may be included in an AF session-related QoS requirement (AFsessionWithQoS) message transmitted from the AF entity to the NEF entity.

PDU set handling-related information may be composed of a protocol descriptor including information such as a PDU set handling indication in an AF session-related QoS requirement request message, codecs of packets for each media type, a sampling rate, a media composition type (Individual service flows) in a service flow, information on whether the PDU set handling is provided for packets in each service flow (PDU set information support indication), and the like. The AS may, after receiving a service request using an individual service flow from the AF entity, include PDU set information in the packet header extension field for each service flow and transfer the same to the UPF entity.

In step 821, the NEF entity may transfer, to the PCF entity, PDU set handling information to be used when supporting a service based on a PDU set received from an AF entity or requirements (such as PDU set information generation and related parameters) by using a policy authorization (PolicyAuthorization) message.

In step 823, the PCF entity may determine whether to accept the request for supporting PDU set handling when using a service through an individual service flow received from the AF entity, based on the recognizer and the protocol descriptor information for the individual service flow. If the PDU set handling service request through an individual service flow is acceptable, the recognizer for PDU set handling received from the AF entity and protocol descriptor information for each individual service flow may be included when generating/updating a PCC rule.

In steps 825 and 827, a response message may be transmitted to indicate that the PDU set handling support requirement through the individual service flow received from the AF entity has been accepted.

In step 829, the PCF entity may transfer, to the SMF entity, an updated PCC rule including updated QoS information for each service flow considering PDU set QoS profiles and media types for each service flow to support PDU set handling services in the RAN, protocol descriptor information indicating that PDU set information is included in a header extension field of the packets in the UPF entity, and the like through the session policy control update notification (Npcf_SMPolicyControl_UpdateNotify) request message.

In step 831, the SMF entity may transfer, to the UPF entity through an N4 session modification request message, related information for PDU set handling including PDU set information detection rules and related parameter information for PDU set-based service support received from the PCF entity by individual service flow based on the updated PCC rule, and may receive a response. The N4 session modification request message may include a packet detection rule (PDR).

In step 833, the SMF entity may transfer, to the AMF entity, an updated QFI and QoS profile of individual service flows, N2 SM information including a PDU set QoS profile, and an N1 SM container including a QoS rule of the individual service flow through an N1N2 message transfer (Namf_Communication_N1N2MessageTransfer) message, based on the PCC rule received from the PCF entity in step 829.

In step 835, the AMF entity may transfer, to the RAN by using an N2 message, N1 SM container including N2 SM information including updated QFIs and QoS profiles, PDU set QoS profiles, etc., for supporting PDU set handling of the service composed of individual service flows transferred in step 833, and QoS rules.

In step 837, the RAN may transfer an N1 SM container including updated QoS rules and the like to the UE to support a service composed of individual service flows.

In steps 839 to 843, the RAN may transmit a response message to the N2 message to the AMF entity in response to the N2 message, and the AMF entity may transmit and receive, to and from the SMF entity, a message indicating that the N2 SM information and N1 SM container including an updated QFI and QoS rule have been reflected based on the received response message of the N2 message.

In step 845, the UPF may detect PDU set information in the RTP packet header extension field, which is transferred to the UPF through the N6 section from the AS inside the DN. Thereafter, if packets of each service flow are transferred to the UPF, the UPF may mark the PDU set information in the packet header extension field in the GTP-U header confirmation field, and transfer the same to the RAN. In addition, the UPF may mark the QFI value transferred from the SMF entity for each QoS flow based on the updated QoS information for each service flow considering the respective media characteristics based on the information in the N4 rule. Specifically, the PDU set information may be configured by at least one of a PDU set sequence number (SN), an end PDU of the PDU set, a PDU set size in bytes, a PDU SN within a PDU set, and a PDU set importance.

In step 847, the RAN may perform a PDU set unit scheduling operation for packets within each QoS flow when congestion occurs based on the PDU set QoS profile and PDU set information for individual service flows received in step 835.

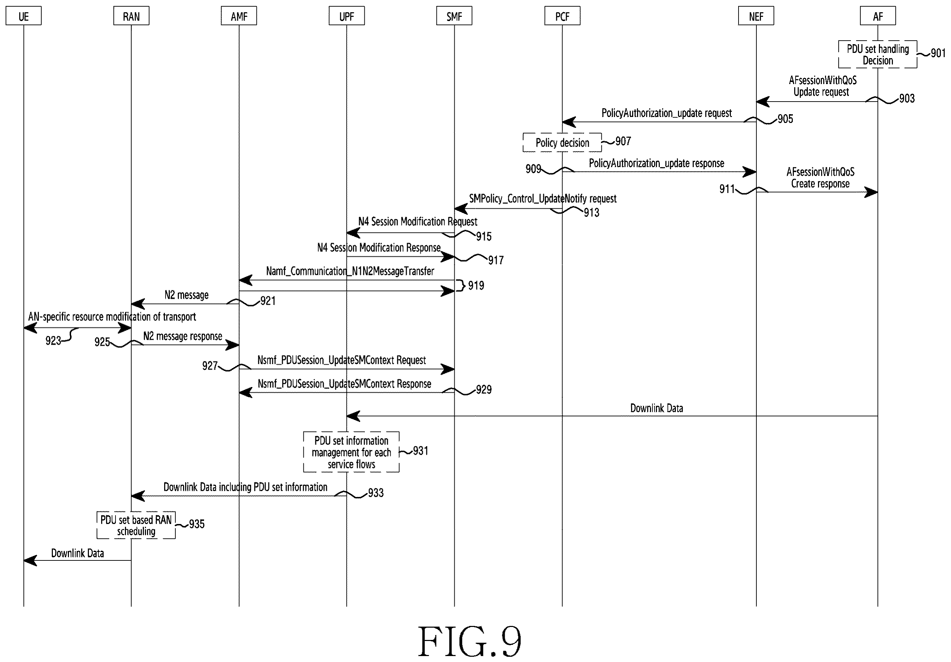

FIG. 9 is a flowchart illustrating a method for supporting one or more individual service flow-based PDU set handling services having the same media type.

In step 901, the AF may determine to support PDU set handling for one or more individual service flows having the same media type.

In step 903, based on the information determined in step 901, the AF entity may transmit, to the NEF entity, PDU set handling-related information including a PDU set handling indication and a protocol description to be used for PDU set-based service support. The PDU set handling-related information may be included in an AF session-related QoS requirement (AFsessionWithQoS) message transmitted from the AF entity to the NEF entity.

PDU set handling-related information may be composed of a protocol descriptor including information such as a PDU set handling indication in an AF session-related QoS requirement request message 802, codecs of packets for each service flow, a sampling rate, a media composition type (Individual service flows) in each service flow, information on whether the PDU set information is supported for packets in each service flow (PDU set information support indication), and the like. The AS may, after receiving a service request using an individual service flow from the AF entity, include PDU set information in the packet header extension field of the service flow and transfer the same to the UPF entity. In addition, in the case that one or more service flows are the service flows connected from an existing AS that is incapable of generating or marking PDU set information, information may be transmitted to the PCF to include information for performing the PDU set information generation operation in the UPF when updating the PCC rule by not including PDU set information support indicator within the protocol description.

In step 905, the NEF entity may transfer, to the PCF entity, PDU set handling information to be used when supporting a service based on a PDU set received from an AF entity or requirements (such as PDU set information generation and related parameters) by using a policy authorization (PolicyAuthorization) message.

In step 907, the PCF entity may recognize that PDU set handling-based processing of packets in the corresponding service flow is to be performed in the RAN from the PDU set handling indicator in the service requirements transferred from the AF entity. In addition, for PDU set information generation or recognition for PDU set handling, the AF entity may recognize from the AF whether packets within the corresponding service layer include PDU set information in the header extension field or whether PDU set information needs to be generated by the UPF entity based the information in the protocol descriptor. The PCF entity may generate a PDU set QoS profile based on a protocol descriptor or pre-defined information to support PDU set handling, and may include the same when generating or updating a PCC rule.

In steps 909 and 911, the PCF entity may inform a response to an update request for PDU set handling information or requirements (such as PDU set information generation and related parameters) to be used in support of PDU set-based services through a requirement update request message response, based on the QoS requirements transferred from the AF entity in steps 903 and 905.

In step 913, the PCF entity may transfer, to the SMF entity, an updated PCC rule including PDU set QoS profiles and updated QoS information for each service flow to support PDU set handling services in the RAN, protocol descriptor information indicating that PDU set information is included in a header extension field of the packets in the UPF entity, and the like through the session policy control update notification (Npcf_SMPolicyControl_UpdateNotify) request message.

In steps 915 and 917, the SMF entity may transfer, to the UPF entity, information on whether the updated QFI value and PDU set information are transmitted from AS (PDU set handling support for all PDU indication) within the packet detection rule (PDR) of each service flow through N4 rule update, the rule for including the corresponding PDU set information within the GTP-U header confirmation field, and information related to PDU set information generation for a corresponding service flow and generation thereof when no separate PDU set information is provided.

In step 919, the SMF entity may transfer, to the AMF entity, an updated QFI and QoS profile of individual service flows, N2 SM information including a PDU set QoS profile, and an N1 SM container including a QoS rule of the individual service flow through an N1N2 message transfer (Namf_Communication_N1N2MessageTransfer) message, based on the PCC rule received from the PCF entity in step 913.

In step 921, the AMF entity may transfer, to the RAN by using an N2 message, N1 SM container including N2 SM information including updated QFI and QoS profile, PDU set QoS profile, etc., for supporting PDU set handling of the service composed of individual service flows transferred in step 919, QoS rule, etc.

In step 923, the RAN may transfer an N1 SM container including updated QoS rules and the like to the UE to support a service composed of individual service flows.

In steps 925 to 929, the RAN may transmit a response message to the N2 message to the AMF entity in response to the N2 message, and the AMF entity may transmit and receive, to and from the SMF entity, a message indicating that the N2 SM information and N1 SM container including an updated QFI and QoS rule have been reflected based on the received response message of the N2 message.

In step 931, if the PDU set information in the RTP packet header extension field transferred from the AS in the DN to the UPF entity through the N6 section is marked and transferred from the AS, the UPF entity may detect the PDU set information. The UPF entity may mark the PDU set information in the packet header extension field in the GTP-U header confirmation field, and transfer the same to the RAN.

If there is no PDU set information in a separate packet header extension field, the UPF entity may generate the PDU set information, and transfer the same to the RAN through a GTP-U header confirmation field. The UPF entity may mark packets, which are transferred through the service flows that are updated and different from each other considering the same media characteristics, by using related QoS information in order to transfer the same to the same QoS flow based on information in the N4 rule. Specifically, the PDU set information may be configured by at least one of a PDU set sequence number (SN), an end PDU of the PDU set, a PDU set size in bytes, a PDU SN within a PDU set, and a PDU set importance. If PDU set information of packets in a service flow transferred from different ASs is mapped to different QoS flows, the UPF entity may perform a PDU set information generation operation.

If different service flows are mapped to the same QoS flow, it may be necessary to have an operation process for generating separate PDU set information. For example, when the PDU set sequence number (SN), the end PDU of the PDU set, the PDU set size in bytes, and the PDU SN within a PDU set in PDU set information are mapped to the same QoS, service flow-specific marking is possible, but the PDU set importance is information indicating the importance between PDU sets, and may require separate management.

If media packets in different service flows in the UPF entity are different media types, that is, in the case of video or audio, the UPF entity may generate separate PDU set importance information according to a network operator or service provider policy, and include the same in PDU set information to be transferred to the RAN. For example, as in FIGS. 2 and 3, if there is no indicator (PDU set information support indication) indicating that PDU set information is provided for all packets in the protocol description information transferred from the AF or if only the protocol description information of the individual video packets includes an indicator indicating that PDU set information is provided in a packet header extension field, the PDU set information is not provided from the AS for audio packets, and thus, whether the PDU set information is transmitted from the AS may be informed to the UPF entity or the PCF entity by not providing a separate indicator in the protocol descriptor. If there is no separate indicator as described above, the PCF entity may recognize that PDU set information should be generated for the audio packet by the UPF, and may transfer relevant information to the UPF entity by including the same in the PCC rule. In addition, the PCF entity may recognize that it does not receive a separate PDU set QoS profile or relevant information from the AF entity, and in the case of an interactive audio service packet transmitted in a single packet, the PDU set QoS profile generation of the audio packet may be determined by determining the mapping to be performed in the same manner as the existing QoS profile. For example, for PDU sets handling of audio packets, PDU set delay budget (PSDB) may be mapped to a packet delay budget (PDB) value in a QoS profile when PDU set QoS profile information for audio service packets transmitted in a single packet is generated, and in the case of PDU set error rate (PSER), a PDU set QoS profile generation operation of audio may be performed by mapping to a packet error rate (PER) value.

In addition, the PDU set importance value in the PDU set information may be generated by using the value of the priority level within the basic 5QI of each media service characteristic. For example, when the QoS characteristic values mapped to 5QI are used, the media characteristics may be considered to configure audio (5QI = 1) and video (5QI = 2) and if the priority levels are configured to 20 and 40, respectively, the PDU set importance value for the audio packet may be configured to be higher than that for the video packet. However, in the case of an RTP bundle, since a separate QoS value for supporting the RTP bundle is configured, the standard 5QI value for each media type may be used only in the case for generating PDU set information for a corresponding media type, when there is a packet for which PDU set information is not separately provided by the AS among packets in the RTP bundle service flow.

If media packets in different service flows in the UPF entity are the same media type, for example, that is, if they are the same video type of service, the PDU set importance value in the PDU set information may be configured according to the policy of a network provider or a service provider. If, during the use of the main XR service, the user utilizes a service such as streaming video as an additional usage type, the streaming video of the additional usage type may be configured with a lower priority than the PDU set importance value of the main XR service at the UPF entity. As described above, when generating PDU set information for packets of the same media type in the service flow transferred to a different AS according to the user's subscription type or service use type, the UPF entity may determine to generate or update the PDU set importance of the packets in each service flow according to the policy of a network provider or a service provider.

In step 933, the UPF entity may transfer downlink data including PDU set information to the RAN.

In step 935, the RAN may perform PDU set unit scheduling of packets in the QoS flow, based on the PDU set QoS profile and PDU set information transferred in step 921.

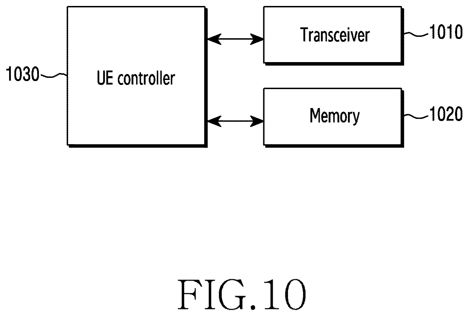

FIG. 10 illustrates a structure of a UE according to an embodiment of the disclosure.

As illustrated in FIG. 10, the UE of the disclosure may include a transceiver 1010, a memory 1020, and a UE controller (or processor) 1030. The UE controller 1030, the transceiver 1010, and the memory 1020 may operate according to the above-described communication methods of the UE. Components of the UE are not limited to the above-described example. For example, the UE may include a larger or smaller number of components than the above-described components. In addition, the UE controller 1030, the transceiver 1010, and the memory 1020 may be implemented in the form of a single chip.

The transceiver 1010 refers to a UE receiver and a UE transmitter as a whole, and may transmit/receive signals with base stations or network entities. The signals transmitted/received with base stations may include control information and data. To this end, the transceiver 1010 may include a radio frequency (RF) transmitter configured to up-convert and amplify the frequency of transmitted signals, an RF receiver configured to low-noise-amplify received signals and down-convert the frequency thereof, and the like. However, this is only an embodiment of the transceiver 1010, and the components of the transceiver 1010 are not limited to the RF transmitter and the RF receiver.

Also, the transceiver 1010 may include wired/wireless transceivers, and may include various components for transmitting/receiving signals. In addition, the transceiver 1010 may receive signals through a radio channel, output the same to the UE controller 1030, and transmit signals output from the UE controller 1030 through the radio channel. Furthermore, the transceiver 1010 may receive communication signals, output same to the UE controller 1030, and transmit signals output from the UE controller 1030 to base stations or network entities through a wired/wireless network.

The memory 1020 may store programs and data necessary for operations of the UE. In addition, the memory 1020 may store control information or data included in signals acquired by the UE. The memory 1020 may include storage media such as a ROM, a RAM, a hard disk, a CD-ROM, and a DVD, or a combination of storage media.

The UE controller 1030 may control a series of processes such that the UE can operate according to the above-described embodiments of the disclosure. The UE controller 1030 may include one or more processors. For example, the UE controller 1030 may include a communication processor (CP) configured to perform control for communication, and an application processor (AP) configured to control upper layers such as application programs.

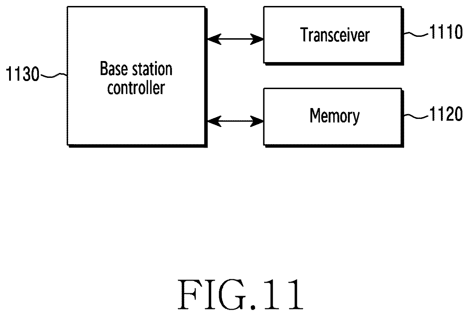

FIG. 11 illustrates a structure of a base station according to an embodiment of the disclosure. The base station illustrated in FIG. 11 may correspond to the radio access node (RAN) described above in FIGS. 1 to 9.

As illustrated in FIG. 11, the base station of the disclosure may include a transceiver 1110, a memory 1120, and a base station controller (or processor) 1130. The base station controller 1130, the transceiver 1110, and the memory 1120 of the base station may operate according to the above-described communication methods of the base station. However, components of the base station are not limited to the above-described example. For example, the base station may include a larger or smaller number of components than the above-described components. According to an embodiment, the overall function of the base station of FIG. 11 may be divided into functions implemented by a CU and a DU, and in this case, the CU and DU may each perform a part of the function performed by the base station of FIG. 11. In addition, the base station controller 1130, the transceiver 1110, and the memory 1120 may be implemented in the form of a single chip.

The transceiver 1110 refers to a base station receiver and a base station transmitter as a whole, and may transmit/receive signals with UEs and/or network devices. The transmitted/received signals may include control information and data. To this end, the transceiver 1110 may include an RF transmitter configured to up-convert and amplify the frequency of transmitted signals, an RF receiver configured to low-noise-amplify received signals and down-convert the frequency thereof, and the like. However, this is only an embodiment of the transceiver 1110, and the components of the transceiver 1110 are not limited to the RF transmitter and the RF receiver. The transceiver 1110 may include wired/wireless transceivers, and may include various components for transmitting/receiving signals.

In addition, the transceiver 1110 may receive signals through a communication channel (e.g., a radio channel), output the same to the base station controller 1130, and transmit signals output from the base station controller 1130 through the communication channel. Furthermore, the transceiver 1110 may receive communication signals, output same to the processor, and transmit signals output from the processor to UEs or network entities through a wired/wireless network.

The memory 1120 may store programs and data necessary for operations of the base station. In addition, the memory 1120 may store control information or data included in a signal acquired by the base station. The memory 1120 may include storage media such as a ROM, a RAM, a hard disk, a CD-ROM, and a DVD, or a combination of storage media.

The base station controller 1130 may control a series of processes such that the base station can operate according to the above-described embodiments of the disclosure. The base station controller 1130 may include one or more processors. Methods disclosed in the claims or methods according to the embodiments described in the specification of the disclosure may be implemented by hardware, software, or a combination of hardware and software.

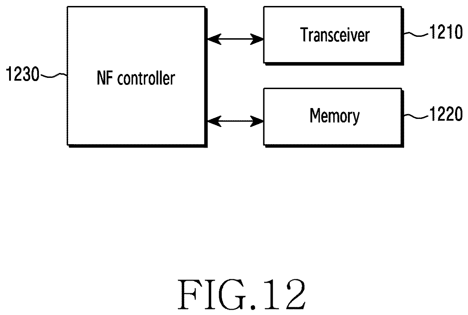

FIG. 12 illustrates a structure of a network function (or network entity) according to an embodiment of the disclosure. The network function (or network entity) illustrated in FIG. 12 may correspond to various functions or entities of the core network described above in FIGS. 1 to 9.

As illustrated in FIG. 12, the network function (NF) (or network entity (NE)) of the disclosure may include a transceiver 1210, a memory 1220, an NF controller (or processor) 1230. The NF controller 1230, the transceiver 1210, and the memory 1220 of the NF (or NE) may operate according to the above-described communication methods of the NF (or NE). However, components of the NF (or NE) are not limited to the above-described example. For example, the NF (or NE) may include a larger or smaller number of components than the above-described components.

The transceiver 1210 refers to an NF (or NE) receiver and an NF (or NE) transmitter as a whole, and may transmit/receive signals with UEs, base stations, and/or other NFs (or NEs). The transmitted/received signals may include control information and data. To this end, the transceiver 1210 may communicate with nodes or base stations of the core network via wired or wireless transceivers. However, this is only an example of the transceiver 1210, and the transceiver 1110 may also include an RF transmitter configured to up-convert and amplify the frequency of transmitted signals, an RF receiver configured to low-noise-amplify received signals and down-convert the frequency thereof, etc., and may include various components for signal transmission or reception.

In addition, the transceiver 1210 may receive signals through a communication channel (e.g., a radio channel), output same to the NF controller 1230, and transmit signals output from the NF controller 1230 through the communication channel. Furthermore, the transceiver 1210 may receive communication signals, output same to the NF controller 1230, and transmit signals output from the NF controller 1230 to UEs, base stations, or network entities through a wired/wireless network.

The memory 1220 may store programs and data necessary for operations of the NF (or NE). In addition, the memory 1220 may store control information or data included in signals acquired by the NF (or NE). The memory 1220 may include storage media such as a ROM, a RAM, a hard disk, a CD-ROM, and a DVD, or a combination of storage media.

The NF controller 1230 may control a series of procedures so that the NF (or NE) can operate according to the aforementioned embodiments of the disclosure. The NF controller 1230 may include one or more processors. Methods disclosed in the claims or methods according to the embodiments described in the specification of the disclosure may be implemented by hardware, software, or a combination of hardware and software.

Methods disclosed in the claims or methods according to the embodiments described in the specification of the disclosure may be implemented by hardware, software, or a combination of hardware and software.

When the methods are implemented by software, a computer-readable storage medium for storing one or more programs (software modules) may be provided. The one or more programs stored in the computer-readable storage medium may be configured for execution by one or more processors within the electronic device. The at least one program includes instructions that cause the electronic device to perform the methods according to various embodiments of the disclosure as defined by the appended claims and/or disclosed herein.

These programs (software modules or software) may be stored in nonvolatile memories including a random access memory and a flash memory, a read only memory (ROM), an electrically erasable programmable read only memory (EEPROM), a magnetic disc storage device, a compact disc-ROM (CD-ROM), digital versatile discs (DVDs), or other type optical storage devices, or a magnetic cassette. Alternatively, any combination of some or all of them may form a memory in which the program is stored. In addition, a plurality of such memories may be included in the electronic device.

Furthermore, the programs may be stored in an attachable storage device which can access the electronic device through communication networks such as the Internet, Intranet, Local Area Network (LAN), Wide LAN (WLAN), and Storage Area Network (SAN) or a combination thereof. Such a storage device may access the electronic device via an external port. Also, a separate storage device on the communication network may access a portable electronic device.

In the above-described detailed embodiments of the disclosure, an element included in the disclosure is expressed in the singular or the plural according to presented detailed embodiments. However, the singular form or plural form is selected appropriately to the presented situation for the convenience of description, and the disclosure is not limited by elements expressed in the singular or the plural. Therefore, either an element expressed in the plural may also include a single element or an element expressed in the singular may also include multiple elements.

Although specific embodiments have been described in the detailed description of the disclosure, it will be apparent that various modifications and changes may be made thereto without departing from the scope of the disclosure. Therefore, the scope of the disclosure should not be defined as being limited to the embodiments set forth herein, but should be defined by the appended claims and equivalents thereof.

## Claims

1. A method performed by a policy control function (PCF) entity in a wireless communication system, the method comprising:
receiving, from an application function (AF) entity through a network exposure function (NEF) entity, a first message including a packet data unit (PDU) set handling indicator and PDU set handling information for a multiplexing service;
based on the first message, determining whether to support PDU set handling base on the multiplexing service; and
transmitting, to the AF entity through the NEF entity, a second message indicating whether to support the PDU set handling based on the multiplexing service.

2. The method of claim 1, further comprising, in case that it is determined to support the PDU set handling based on the multiplexing service:
updating a quality of service (QoS) of a multiplexed service flow, based on the PDU set handling indicator and the PDU set handling information;
updating the updated QoS to a policy and charging control (PCC) rule; and
transmitting, to a session management function (SMF) entity, a third message including the updated PCC rule.

3. The method of claim 1, wherein the PDU set handling information includes codecs of packets for each media type, sampling rates, media types for packets in a service flow, and PDU set handling indicators for the packets in the service flow, received from an application server (AS) entity.

4. The method of claim 1, wherein the PDU set handling indicator and the PDU set handling information are received while being included in a protocol descriptor.

5. A method performed by an application function (AF) entity in a wireless communication system, the method comprising:
determining to support a multiplexing service;
based on the determination, transmitting, to a policy control function (PCF) entity through a network exposure function (NEF) entity, a first message including a packet data unit (PDU) set handling indicator and PDU set handling information for the multiplexing service,; and
receiving, from the PCF entity through the NEF entity, a second message indicating whether to support the PDU set handling based on the multiplexing service.

6. The method of claim 5, wherein the PDU set handling information includes codecs of packets for each media type, sampling rates, media types for packets in a service flow, and PDU set handling indicators for the packets in the service flow, received from an application server (AS) entity.

7. The method of claim 5, wherein the PDU set handling indicator and the PDU set handling information are transmitted while being included in a protocol descriptor.

8. A policy control function (PCF) entity in a wireless communication system, the PCF entity comprising:
a transceiver; and
a controller coupled to the transceiver,
wherein the controller is configured to:
receive, from an application function (AF) entity through a network exposure function (NEF) entity, a first message including a packet data unit (PDU) set handling indicator and PDU set handling information for a multiplexing service;
based on the first message, determine whether to support PDU set handling based on the multiplexing service; and
transmit, to the AF entity through the NEF entity, a second message indicating whether to support the PDU set handling based on the multiplexing service.

9. The PCF entity of claim 8, wherein the controller is configured to, in case that it is determined to support the PDU set handling based on the multiplexing service:
update a quality of service (QoS) of a multiplexed service flow, based on the PDU set handling indicator and the PDU set handling information;
update the updated QoS to a policy and charging control (PCC) rule; and
transmit, to a session management function (SMF) entity, a third message including the updated PCC rule.

10. The PCF entity of claim 8, wherein the PDU set handling information includes codecs of packets for each media type, sampling rates, media types for packets in a service flow, and PDU set handling indicators for the packets in the service flow. received from an application server (AS) entity.

11. The PCF entity of claim 8, wherein the PDU set handling indicator and the PDU set handling information are received while being included in a protocol descriptor.

12. An application function (AF) entity in a wireless communication system, the AF entity comprising:
a transceiver; and
a controller coupled to the transceiver,
wherein the controller is configured to:
determine to support a multiplexing service;
based on the determination, transmit, to a policy control function (PCF) entity through a network exposure function (NEF) entity, a first message including a packet data unit (PDU) set handling indicator and PDU set handling information for the multiplexing service; and
receive, from the PCF entity through the NEF entity, a second message indicating whether to support the PDU set handling based on the multiplexing service.

13. The AF entity of claim 12, wherein the PDU set handling information includes codecs of packets for each media type, sampling rates, media types for packets in a service flow, and PDU set handling indicators for the packets in the service flow, received from an application server (AS) entity.

14. The AF entity of claim 12, wherein the PDU set handling indicator and the PDU set handling information are transmitted while being included in a protocol descriptor.
